(19) Europäisches Patentamt
European Patent Office
Office européen des brevets

(11) EP 3 932 760 A1

(12) EUROPEAN PATENT APPLICATION

(43) Date of publication:
**05.01.2022 Bulletin 2022/01**

(21) Application number: **21177632.3**

(22) Date of filing: **03.06.2021**

(51) Int Cl.:
***B60W 10/06*** (2006.01) ***B60W 10/08*** (2006.01)
***B60W 10/26*** (2006.01) ***B60W 50/14*** (2020.01)
***B60W 50/16*** (2020.01) ***B60W 20/12*** (2016.01)
***B60W 50/00*** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.07.2020 JP 2020115564**

(71) Applicant: **Toyota Jidosha Kabushiki Kaisha**
**Toyota-shi, Aichi-ken 471-8571 (JP)**

(72) Inventors:
- **KAGEURA, Yoshiyuki**
  **Toyota-shi,**
  **Aichi-Ken 471-8571 (JP)**
- **YOKOYAMA, Daiki**
  **Toyota-shi,**
  **Aichi-Ken 471-8571 (JP)**

(74) Representative: **D Young & Co LLP**
**120 Holborn**
**London EC1N 2DY (GB)**

# (54) CONTROL SYSTEM AND CONTROL METHOD FOR HYBRID VEHICLE

(57) Provided is a hybrid vehicle (10) that includes an internal combustion engine (11) and an electric motor (12), and switches a driving mode between an EV mode and an HV mode. A position of the hybrid vehicle (10) is determined, when determination is made that the hybrid vehicle (10) is within a low emission zone (LEZ) where operation of the internal combustion engine (11) is to be restricted, the operation of the internal combustion engine (11) is stopped, and when determination is made that the hybrid vehicle (10) is within an entrance area (ENA) adjacent to a boundary (GF) of the low emission zone (LEZ) outside the low emission zone (LEZ), an occupant of the hybrid vehicle (10) is notified that the hybrid vehicle (10) enters or is likely to enter the low emission zone (LEZ) soon. Selected drawing: FIG. 1

FIG. 1

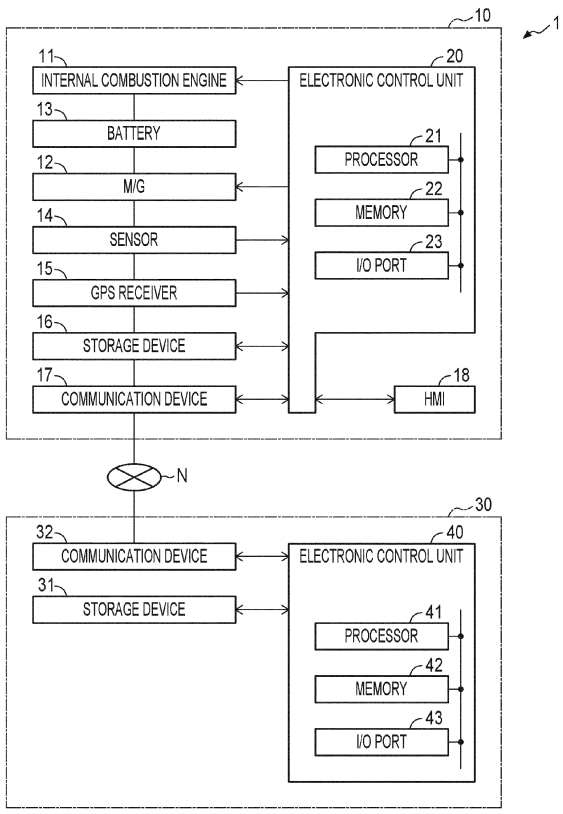


EP 3 932 760 A1

## Description

BACKGROUND OF THE INVENTION

1. Field of the Invention

The present disclosure relates to a control system and a control method for a hybrid vehicle.

2. Description of Related Art

There is known a hybrid vehicle that includes an electric motor configured to generate vehicle drive power, a power generator, and an internal combustion engine configured to drive the power generator, and stops the internal combustion engine when determination is made that the hybrid vehicle is within an area designed for enhanced air pollution prevention (for example, see Japanese Unexamined Patent Application Publication No. 03-075210 (JP 03-075210 A)).

SUMMARY OF THE INVENTION

In JP 03-075210 A, in a case where the hybrid vehicle in which the internal combustion engine is being operated enters the area designed for enhanced air pollution prevention from the outside of the area, the internal combustion engine is stopped. Incidentally, in a case where the internal combustion engine is stopped in this way, vibration and noise caused by the operation of the internal combustion engine suddenly disappear. For this reason, there is a concern that an occupant (including a driver) of the hybrid vehicle misrecognizes that the internal combustion engine fails.

According to the present disclosure, the following is provided.

A first aspect of the present disclosure relates to a control system for a hybrid vehicle that includes an internal combustion engine and an electric motor, and switches a driving mode between an EV mode where operation of the internal combustion engine is stopped and the electric motor is operated and an HV mode where the internal combustion engine and the electric motor are operated. The control system for a hybrid vehicle includes a position determination unit, a driving controller, and an HMI controller. The position determination unit is configured to determine a position of the hybrid vehicle. The driving controller is configured to stop the operation of the internal combustion engine when determination is made that the hybrid vehicle is within a low emission zone where the operation of the internal combustion engine is to be restricted. The HMI controller is configured to execute notification processing of notifying an occupant of the hybrid vehicle that the hybrid vehicle enters or is likely to enter the low emission zone soon when determination is made that the hybrid vehicle is within an entrance area adjacent to a boundary of the low emission zone outside the low emission zone.

In the first aspect, the HMI controller may be further configured to confirm with the occupant of the hybrid vehicle whether or not the occupant wants to bypass the low emission zone while executing the notification processing.

In the first aspect, the control system may further include a bypass route calculation unit configured to calculate a bypass route for bypassing the low emission zone. The HMI controller may be further configured to present the bypass route to the occupant while executing the notification processing.

In the first aspect, the control system may further include an SOC controller configured to execute SOC increase control for increasing a charging rate of a battery of the hybrid vehicle when determination is made that the hybrid vehicle is within the entrance area.

In the first aspect, the SOC controller may be further configured to, when determination is made that the hybrid vehicle is within the entrance area, not execute the SOC increase control when determination is made that the charging rate of the battery of the hybrid vehicle is higher than a predetermined threshold value, and execute the SOC increase control when determination is made that the charging rate of the battery is lower than the threshold value.

A second aspect of the present disclosure relates to a control method for a hybrid vehicle that includes an internal combustion engine and an electric motor, and switches a driving mode between an EV mode where operation of the internal combustion engine is stopped and the electric motor is operated and an HV mode where the internal combustion engine and the electric motor are operated. The control method for a hybrid vehicle includes determining a position of the hybrid vehicle, stopping the operation of the internal combustion engine when determination is made that the hybrid vehicle is within a low emission zone where the operation of the internal combustion engine is to be restricted, and executing notification processing of notifying an occupant of the hybrid vehicle that the hybrid vehicle enters or is likely to enter the low emission zone soon when determination is made that the hybrid vehicle is within an entrance area adjacent to a boundary of the low emission zone outside the low emission zone.

According to the aspects of the present disclosure, it is possible to restrain the occupant of the hybrid vehicle from misrecognizing a state of the hybrid vehicle.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a schematic general view of a control system according to a first embodiment of the present disclosure;

FIG. 2 is a schematic view of a low emission zone according to the first embodiment of the present disclosure;

FIG. 3 is a functional block diagram of a vehicle in the first embodiment of the present disclosure;

FIG. 4 is a functional block diagram of a server in the first embodiment of the present disclosure;

FIG. 5 is a schematic view of the low emission zone and an entrance area according to the first embodiment of the present disclosure;

FIG. 6 is a schematic view showing an example of notification according to the first embodiment of the present disclosure;

FIG. 7 is a time chart illustrating the first embodiment of the present disclosure;

FIG. 8 is a flowchart for executing a vehicle control routine according to the first embodiment of the present disclosure;

FIG. 9 is a flowchart for executing a server control routine according to the first embodiment of the present disclosure;

FIG. 10 is a schematic view showing an example of an approach route and a bypass route according to a second embodiment of the present disclosure;

FIG. 11 is a schematic view showing an example of a confirmation screen according to the second embodiment of the present disclosure;

FIG. 12 is a flowchart for executing a vehicle control routine according to the second embodiment of the present disclosure;

FIG. 13 is a flowchart for executing the vehicle control routine according to the second embodiment of the present disclosure;

FIG. 14 is a functional block diagram of a server in a third embodiment of the present disclosure;

FIG. 15 is a flowchart for executing a vehicle control routine according to the third embodiment of the present disclosure;

FIG. 16 is a flowchart for executing a server control routine according to the third embodiment of the present disclosure;

FIG. 17 is a functional block diagram of a vehicle in a fourth embodiment of the present disclosure;

FIG. 18 is a time chart illustrating the fourth embodiment of the present disclosure;

FIG. 19 is a flowchart for executing a vehicle control routine according to the fourth embodiment of the present disclosure;

FIG. 20 is a flowchart for executing the vehicle control routine according to the fourth embodiment of the present disclosure;

FIG. 21 is a flowchart for executing a server control routine according to the fourth embodiment of the present disclosure;

FIG. 22 is a functional block diagram of a vehicle in a fifth embodiment of the present disclosure;

FIG. 23 is a time chart illustrating the fifth embodiment of the present disclosure;

FIG. 24 is a flowchart for executing a vehicle control routine according to the fifth embodiment of the present disclosure;

FIG. 25 is a flowchart for executing the vehicle control routine according to the fifth embodiment of the present disclosure;

FIG. 26 is a flowchart for executing a server control routine according to the fifth embodiment of the present disclosure; and

FIG. 27 is a schematic view illustrating another embodiment of SOC increase control according to the present disclosure.

## DETAILED DESCRIPTION OF EMBODIMENTS

A first embodiment of the present disclosure will be described referring to FIGS. 1 to 9. Referring to FIG. 1, a control system 1 for a hybrid vehicle according to the first embodiment of the present disclosure includes a hybrid vehicle 10 and a server 30 outside the hybrid vehicle 10.

The hybrid vehicle 10 according to the first embodiment of the present disclosure includes an internal combustion engine 11, a motor generator (M/G) 12, a battery 13, at least one sensor 14, a GPS receiver 15, a storage device 16, a communication device 17, a human-machine interface (HMI) 18, and an electronic control unit 20.

The internal combustion engine 11 according to the first embodiment of the present disclosure is, for example, a spark ignition engine or a compression ignition engine. The internal combustion engine 11 (for example, a fuel injection valve, a spark plug, and a throttle valve) is controlled based on a signal from the electronic control unit 20.

The motor generator 12 according to the first embodiment of the present disclosure operates as an electric motor or a power generator. The motor generator 12 is controlled based on a signal from the electronic control unit 20.

In the first embodiment of the present disclosure, a driving mode of the hybrid vehicle 10 can be switched between an EV mode and an HV mode. In the EV mode according to the first embodiment of the present disclosure, the internal combustion engine 11 is stopped and the motor generator 12 is operated as an electric motor. In this case, an output of the motor generator 12 is transmitted to an axle. On the other hand, in the HV mode according to the first embodiment of the present disclosure, the internal combustion engine 11 is operated and the motor generator 12 is operated as an electric motor. In this case, in an example, an output of the internal combustion engine 11 and the output of the motor generator 12 are transmitted to the axle. In another example, the output of the motor generator 12 is transmitted to the axle, the output of the internal combustion engine 11 is transmitted to the power generator (not shown), and the power generator is operated. Electric power generated by the power generator is sent to the motor generator 12 or the battery 13. In still another example, a part of the output of the internal combustion engine 11 and the output of the motor generator 12 is transmitted to the axle, and the rest of the output of the internal combustion engine 11 is transmitted to the power generator. Electric power generated by the power generator is sent to the motor generator 12 or the battery 13. In the first embodiment of the present disclosure, in the EV mode and the HV mode, regenerative control using the motor generator 12 as a power generator is executed, for example, at the time of deceleration operation. Electric power generated with the regenerative control is sent to the battery 13.

The battery 13 according to the first embodiment of the present disclosure is charged with electric power from the motor generator 12 that is operated as a power generator or the power generator (not shown) that is driven by the internal combustion engine 11. In another embodiment (not shown), the battery 13 can be charged by an external power supply. On the other hand, according to the first embodiment of the present disclosure, electric power is supplied from the battery 13 to the motor generator 12 that operates as an electric motor, the electronic control unit 20, and other kinds of in-vehicle equipment.

The sensor 14 according to the first embodiment of the present disclosure detects various kinds of raw data. Examples of the sensor 14 according to the first embodiment of the present disclosure include a load sensor that detects a requested vehicle load represented by a depression amount of an accelerator pedal, a throttle valve opening degree sensor that detects a throttle valve opening degree of the internal combustion engine 11, an NOx sensor that detects an NOx concentration in exhaust gas of the internal combustion engine 11, a rotation speed sensor that detects a rotation speed of the internal combustion engine 11, a voltmeter and an ammeter that detect a voltage and a current of the battery 13, and a speed sensor that detects a speed of the vehicle 10. Output signals of such sensors 14 are input to the electronic control unit 20.

The GPS receiver 15 according to the first embodiment of the present disclosure receives signals from GPS satellites and detects information representing an absolute position (for example, longitude and latitude) of the vehicle 10 from the received signals. Positional information of the vehicle 10 is input to the electronic control unit 20.

The storage device 16 according to the first embodiment of the present disclosure stores various kinds of data in advance. The communication device 17 according to the first embodiment of the present disclosure is connectable to, for example, a communication network N, such as the Internet.

The HMI 18 according to the first embodiment of the present disclosure exchanges information between an occupant (including a driver) of the vehicle 10 and the control system 1. Specifically, the HMI 18 has a notification function of giving, for example, visual, auditory, tactual, and olfactory notification to the occupant of the vehicle 10 and an input function of receiving an input from the occupant of the vehicle 10. The HMI 18 includes, for example, a display, a lamp, a speaker, and a vibrator for the notification function, and includes, for example, a touch panel, a button, and a switch for the input function. In another embodiment (not shown), the HMI 18 has the notification function without having the input function.

The electronic control unit 20 of the vehicle 10 according to the first embodiment of the present disclosure includes one or a plurality of processors 21, one or a plurality of memories 22, and an input-output (I/O) port 23 connected in a communicatable manner by a bidirectional bus. The memory 22 includes, for example, a ROM, a RAM, or the like. Various programs are stored in the memory 22, and various functions are realized by the processor 21 executing such programs. The internal combustion engine 11, the motor generator 12, the sensor 14, the GPS receiver 15, the storage device 16, the communication device 17, and the HMI 18 described above are connected to the input-output port 23 according to the first embodiment of the present disclosure in a communicatable manner. In the processor 21 according to the first embodiment of the present disclosure, an SOC or a charging rate of the battery 13 is calculated based on, for example, the voltage and the current of the battery 13.

Further referring to FIG. 1, the server 30 according to the first embodiment of the present disclosure includes a storage device 31, a communication device 32, and an electronic control unit 40.

In the storage device 31 according to the first embodiment of the present disclosure, positional information (for example, latitude and longitude) of a low emission zone where the operation of the internal combustion engine 11 is to be restricted is stored. FIG. 2 schematically shows an example of a low emission zone LEZ according to the first embodiment of the present disclosure. The low emission zone LEZ according to the first embodiment of the present disclosure is surrounded by a closed boundary or a geofence GF. The low emission zone LEZ is set in, for example, an urban area. In a zone outside the low emission zone LEZ, that is, a general zone GEZ, the operation of the internal combustion engine 11 is permitted without restriction.

The communication device 32 according to the first embodiment of the present disclosure is connectable to the communication network N. Accordingly, the vehicle 10 and the server 30 are connectable through the communication network N.

The electronic control unit 40 of the server 30 according to the first embodiment of the present disclosure includes one or a plurality of processors 41, one or a plurality of memories 42, and an input-output port 43 connected in a communicatable manner by a bidirectional bus like the electronic control unit 20 of the vehicle 10.

The storage device 31 and the communication device 32 described above are connected to the input-output port 43 according to the first embodiment of the present disclosure in a communicatable manner.

FIG. 3 is a functional block diagram of the vehicle 10 according to the first embodiment of the present disclosure. Referring to FIG. 3, the electronic control unit 20 of the vehicle 10 includes a positional information acquisition unit 20a, a driving controller 20b, and an HMI controller 20c.

The positional information acquisition unit 20a according to the first embodiment of the present disclosure acquires the positional information of the vehicle 10 from the GPS receiver 15. The positional information acquisition unit 20a transmits the positional information to the server 30.

Further referring to FIG. 3, the driving controller 20b according to the first embodiment of the present disclosure changes the driving mode between the EV mode and the HV mode. In an example, the EV mode is executed when the requested vehicle load is lower than a predetermined set load, and the driving mode is switched to the HV mode when the requested vehicle load is higher than the set load. The EV mode is executed when the SOC of the battery 13 is higher than a predetermined set SOC, and the driving mode is switched to the HV mode in a case where the SOC of the battery 13 is lower than the set SOC. In a case where determination is made that the vehicle 10 is within the low emission zone LEZ, the driving controller 20b switches the driving mode to the EV mode and maintains the EV mode. In addition, the driving controller 20b controls an operation state of the internal combustion engine 11 and an operation state of the motor generator 12.

The HMI controller 20c of the according to the first embodiment of the present disclosure executes control on the HMI 18 to execute at least notification processing to the occupant of the vehicle 10.

On the other hand, FIG. 4 is a functional block diagram of the server 30 according to the first embodiment of the present disclosure. Referring to FIG. 4, the electronic control unit 40 of the server 30 includes a position determination unit 40a.

The position determination unit 40a according to the first embodiment of the present disclosure determines whether or not the vehicle 10 is within the low emission zone LEZ from the positional information of the vehicle 10 transmitted from the vehicle 10 to the server 30 and the positional information of the low emission zone LEZ stored in the storage device 31. The position determination unit 40a determines whether or not the vehicle 10 is within an entrance area ENA (described below). In addition, the position determination unit 40a creates instruction data corresponding to such determination results and transmits the instruction data to the vehicle 10.

In the first embodiment of the present disclosure, as shown in FIG. 5, the general zone GEZ other than the low emission zone LEZ is divided into the entrance area ENA adjacent to a boundary GF of the low emission zone LEZ and an outside area OTA farther from the low emission zone LEZ than the entrance area ENA. Accordingly, the vehicle 10 passes through the entrance area ENA when entering the low emission zone LEZ from the general zone GEZ. In the first embodiment of the present disclosure, the entrance area ENA is defined as, for example, an area within a distance (for example, a traveling distance) from the boundary GF shorter than a predetermined threshold value Dx. D in FIG. 5 represents a distance (for example, traveling distance) between a current position of the vehicle 10 and the boundary GF or the low emission zone LEZ.

In the first embodiment of the present disclosure, when the vehicle 10 is within the general zone GEZ, determination is made that the vehicle 10 is within the entrance area ENA when determination is made that the distance D is shorter than the threshold value Dx, and determination is made that the vehicle 10 is outside the entrance area ENA, that is, within the outside area OTA when determination is made that the distance D is longer than the threshold value Dx. Accordingly, the threshold value Dx can be considered as positional information of the entrance area ENA. The positional information of the entrance area ENA is stored in, for example, the storage device 31 of the server 30.

Now, in the first embodiment of the present disclosure, in a case where the vehicle 10 acquires the positional information of the vehicle 10, the positional information of the vehicle 10 is transmitted to the server 30. In a case where the positional information of the vehicle 10 is received, the position determination unit 40a of the server 30 determines whether the vehicle 10 is within the low emission zone LEZ or the general zone GEZ from the received positional information of the vehicle 10 and the positional information of the low emission zone LEZ stored in the storage device 31. When determination is made that the vehicle 10 is within the low emission zone LEZ, the position determination unit 40a creates instruction data including an EV instruction and transmits the instruction data to the vehicle 10.

On the other hand, when determination is made that the vehicle 10 is within the general zone GEZ, the position determination unit 40a creates instruction data including a maintenance instruction. The position determination unit 40a determines whether or not the vehicle 10 is within the entrance area ENA from the positional information of the vehicle 10 and the positional information of the entrance area ENA. When determination is made that the vehicle 10 is within the entrance area ENA, the position determination unit 40a creates instruction data including a notification instruction. In contrast, when determination is made that the vehicle 10 is outside the entrance area ENA, that is, within the outside area OTA, the position determination unit 40a creates instruction data including a notification stop instruction. Next, the position determination unit 40a transmits the instruction data including the maintenance instruction and the notification instruction or the instruction data including the maintenance instruction and the notification stop instruction to the vehicle 10.

In a case where the vehicle 10 receives the instruction data from the server 30, the HMI controller 20c of the vehicle 10 determines whether or not the received instruction data includes the notification instruction. When determination is made that the instruction data includes the notification instruction, the HMI controller 20c notifies the occupant of the vehicle 10 that the vehicle 10 enters or is likely to enter the low emission zone LEZ soon, using the HMI 18. FIG. 6 shows an example of notification to the occupant of the vehicle 10. In the example of FIG. 6, a text message for notifying that the vehicle 10 enters the low emission zone LEZ soon is displayed on a display of the HMI 18.

On the other hand, when determination is made that the instruction data does not include the notification instruction, the driving controller 20b determines whether or not the instruction data includes the EV instruction. When determination is made that the instruction data includes the EV instruction, the driving controller 20b switches the driving mode to the EV mode or maintains the driving mode. In contrast, when determination is made that the instruction data includes the maintenance instruction, the driving controller 20b maintains the driving mode. That is, when the EV mode is executed, the EV mode is continued, and when the HV mode is executed, the HV mode is continued.

That is, in an example shown in FIG. 7, determination is made that the vehicle 10 is within the outside area OTA of the general zone GEZ until time ta1, and in this case, the notification is stopped in response to a notification stop instruction. In the example shown in FIG. 7, the driving mode is maintained in the HV mode in response to the maintenance instruction. Next, in a case where determination is made that the vehicle 10 enters the entrance area ENA at time ta1, notification is performed to the occupant of the vehicle 10 in response to the notification instruction. Next, in a case where determination is made that the vehicle 10 leaves the entrance area ENA and enters the low emission zone LEZ at time ta2, the notification is stopped in response to the notification stop instruction. The driving mode of the vehicle 10 is switched to the EV mode in response to the EV instruction, and accordingly, the internal combustion engine 11 is stopped.

As a result, the occupant of the vehicle 10 can know in advance that the vehicle 10 enters or is likely to enter the low emission zone LEZ soon, that is, the internal combustion engine 11 is stopped or is likely to be stopped soon, through the above-described notification. Accordingly, when the vehicle 10 enters the low emission zone LEZ later and the internal combustion engine 11 is stopped, the occupant is restrained from misrecognizing that the internal combustion engine 11 fails. The occupant can know that the driving mode is maintained or is likely to be maintained in the EV mode, through the above-described notification. Accordingly, a driver of the vehicle 10 can perform, for example, adjustment of the requested vehicle load (for example, the depression amount of the accelerator pedal) and management of the SOC of the battery 13 such that the SOC of the battery 13 does not decrease excessively.

In the example shown in FIG. 7, the notification is performed over an entire period (time ta1 to ta2) during which determination is made that the vehicle 10 is within the entrance area ENA. In another embodiment (not shown), the notification is temporarily performed in a part of the period, for example, immediately after the vehicle 10 enters the entrance area ENA.

FIG. 8 shows a routine for executing control in the vehicle 10 in the first embodiment of the present disclosure. The routine is repeated, for example, at each predetermined set time. Referring to FIG. 8, in Step S100, the positional information of the vehicle 10 is acquired. In subsequent Step S101, the positional information of the vehicle 10 is transmitted to the server 30. In subsequent Step S102, determination is made whether or not the instruction data is received from the server 30. Step S102 is repeated until determination is made that the instruction data is received from the server 30. In a case where determination is made that the instruction data is received from the server 30, next, the process progresses to Step S103, and determination is made whether or not the notification instruction is included in the instruction data. When determination is made that the notification instruction is included in the instruction data, next, the process progresses to Step S104, and the notification by the HMI 18 is performed. In contrast, when determination is made that the notification instruction is not included in the instruction data, next, the process progresses to Step S105, and the notification by the HMI 18 is stopped. In subsequent Step S106, determination is made whether or not the instruction data includes the EV instruction. When the instruction data includes the EV instruction, next, the process progresses to Step S107, and the driving mode is switched to the EV mode or is maintained. In contrast, when the EV instruction is not included in the instruction data, next, the process progresses to Step S108, and the driving mode is maintained.

FIG. 9 shows a routine for executing control in the server 30 in the first embodiment of the present disclosure. The routine is repeated, for example, at each predetermined set time. Referring to FIG. 9, in Step S200, determination is made whether or not the positional information of the vehicle 10 is received from the vehicle 10. When determination is made that the positional information of the vehicle 10 is not received, the process cycle ends. In a case where determination is made that the positional information of the vehicle 10 is received, the process progresses to Step S201, and determination is made whether or not the vehicle 10 is within the general zone GEZ. When determination is made that the vehicle 10 is not within the general zone GEZ, that is, is within the low emission zone LEZ, next, the process progresses to Step S202, and the instruction data including the EV instruction is created. Next, the process progresses to Step S207. On the other hand, when determination is made that the vehicle 10 is within the general zone GEZ, next, the process progresses to Step S203, and the instruction data including the maintenance instruction is created. Next, the process progresses to Step S204, and determination is made whether or not the vehicle 10 is within the entrance area ENA. When determination is made that the vehicle 10 is within the entrance area ENA, next, the process progresses to Step S205, and the instruction data including the notification instruction is created. Next, the process progresses to Step S207. In contrast, when determination is made that the vehicle 10 is not within the entrance area ENA, that is, is within the outside area OTA, next, the process progresses to Step S206, and the instruction data including the notification stop instruction is created. Next, the process progresses to Step S207. In Step S207, the instruction data is transmitted to the vehicle 10.

Next, a second embodiment of the present disclosure will be described referring to FIGS. 10 to 13. The second embodiment of the present disclosure is different from the first embodiment of the present disclosure in the following point. That is, an HMI controller 20c according to the second embodiment of the present disclosure vehicle 10 confirms with the occupant of the vehicle 10 whether or not the occupant wants the vehicle 10 to bypass the low emission zone LEZ while executing the above-described notification processing.

In a case where the vehicle 10 enters the low emission zone LEZ, the driving mode is restricted to the EV mode. Incidentally, in the EV mode, the internal combustion engine 11 is not operated, and thus, a speed of the vehicle 10 is likely to be restricted compared to the HV mode. The occupant is likely to feel uneasy about whether or not the SOC of the battery 13 is sufficient for the vehicle 10 to pass through the low emission zone LEZ. For this reason, the occupant of the vehicle 10 is likely to want the vehicle 10 to bypass the low emission zone LEZ rather than to travel within the low emission zone LEZ. The vehicle 10 bypasses the low emission zone LEZ means that the vehicle 10 continues to travel through the general zone GEZ, and the above-described problem does not occur.

FIG. 10 shows an example of a route along which the vehicle 10 enters the low emission zone LEZ, that is, an approach route Re and a route along which the vehicle 10 bypasses the low emission zone LEZ, that is, a bypass route Rb. In the example shown in FIG. 10, even though a traveling distance of the bypass route Rb is longer than a traveling distance of the approach route Re, a needed time of the bypass route Rb is not always longer than a needed time of the approach route Re.

In the second embodiment of the present disclosure, whether or not the occupant wants the vehicle 10 to bypass the low emission zone LEZ successively to or simultaneously with the notification that the vehicle 10 enters or is likely to enter the low emission zone LEZ is confirmed by the occupant of the vehicle 10. In an example, a confirmation screen is displayed on the display of the HMI 18. FIG. 11 shows an example of the confirmation screen. The occupant operates the HMI 18 to input that the occupant wants the vehicle 10 to bypass the low emission zone LEZ ("YES") or that the occupant wants the vehicle 10 to enter the low emission zone LEZ("NO").

In the second embodiment of the present disclosure, in a case where the input that the occupant of the vehicle 10 wants to bypass the low emission zone LEZ, control suitable for the vehicle 10 bypassing the low emission zone LEZ, that is, bypass control is executed. The bypass control includes, for example, calculation and presentation to the occupant of the bypass route Rb and preparation (for example, warming-up of the internal combustion engine 11) of the HV mode. In contrast, in a case where the input that the occupant of the vehicle 10 wants to enter the low emission zone LEZ is made, control suitable for the vehicle 10 traveling within the low emission zone LEZ, that is, LEZ control is executed. The LEZ control includes, for example, calculation and presentation to the occupant of the approach route Re and preparation (for example, securing of the SOC of the battery 13) of the EV mode. As a result, appropriate control corresponding to the intention of the occupant of the vehicle 10 is executed. It is possible to perform appropriate preparation corresponding to a future traveling route.

Even though the confirmation screen is displayed, an input from the occupant may not be made over a long time. In the second embodiment of the present disclosure, when an input from the occupant is not made over a predetermined time tx, determination is made that the occupant does not want to bypass the low emission zone LEZ. In another example (not shown), determination is made that the occupant wants to bypass the low emission zone LEZ.

FIGS. 12 and 13 show a routine for executing control in the vehicle 10 in the second embodiment of the present disclosure. A difference from the routine shown in FIG. 8 is that, in the routine shown in FIGS. 12 and 13, the process progresses to Step S110 subsequently to Step S104, and the confirmation screen is displayed by the HMI 18. In subsequent Step S111, determination is made whether or not there is an input from the occupant. In a case where there is an input from the occupant, next, the process progresses to Step S112, and determination is made whether or not the input that the occupant wants to bypass the low emission zone LEZ is made. When the input that the occupant wants to bypass the low emission zone LEZ is made, next, the process progresses to Step S113, and the bypass control is executed. In contrast, when the input that the occupant wants to enter the low emission zone LEZ is made, next, the process progresses to Step S114, and the LEZ control is executed.

On the other hand, when there is no input from the occupant, the process progresses from Step S111 to Step S115, and determination is made whether or not the predetermined time tx has elapsed after the confirmation screen is presented. When determination is made that the time tx has not elapsed, the process returns to Step Sill. When determination is made that the time tx has elapsed, the process progresses from Step S115 to Step S114.

Next, a third embodiment of the present disclosure will be described referring to FIGS. 14 to 16. The third embodiment of the present disclosure is different from the first embodiment of the present disclosure in the following point. That is, as shown in FIG. 14, an electronic control unit 40 of a server 30 according to the third embodiment of the present disclosure includes a bypass route calculation unit 40b. The bypass route calculation unit 40b calculates the bypass route Rb (FIG. 10) based on, the positional information of the low emission zone LEZ.

In the third embodiment of the present disclosure, in a case where determination is made that the vehicle 10 is within the entrance area ENA, the above-described notification instruction is created, and the bypass route Rb is calculated. Next, instruction data including the notification instruction and information regarding the bypass route Rb is transmitted from the server 30 to the vehicle 10. Next, in the vehicle 10, the bypass route Rb is presented to the occupant of the vehicle 10 by the HMI 18 successively to or simultaneously with the notification that the vehicle 10 enters or is likely to enter the low emission zone LEZ. As a result, it is possible to allow the occupant to easily determine whether to enter the low emission zone LEZ or to bypass the low emission zone LEZ.

FIG. 15 shows a routine for executing control in the vehicle 10 in the third embodiment of the present disclosure. A difference from the routine shown in FIG. 8 is that, in the routine shown in FIG. 15, the process progresses to Step S120 subsequently to Step S104, and the bypass route Rb is presented to the occupant of the vehicle 10 by the HMI 18. Information regarding the bypass route Rb is transmitted from the server 30 along with the notification instruction and is received by the vehicle 10.

FIG. 16 shows a routine for executing control in the server 30 in the third embodiment of the present disclosure. A difference from the routine shown in FIG. 9 is that, in the routine shown in FIG. 16, the process progresses to Step S205a subsequently to Step S205, and the bypass route Rb is calculated. In subsequent Step S207a, the instruction data including the notification instruction and information regarding the bypass route Rb is transmitted to the vehicle 10.

In the third embodiment of the present disclosure, the bypass route Rb is calculated in the server 30. In another embodiment (not shown), the bypass route Rb is calculated in the vehicle 10. In this case, the positional information of the low emission zone LEZ is stored in the vehicle 10.

In another embodiment (not shown), when there is the input that the occupant of the vehicle 10 wants to bypass the low emission zone LEZ, the bypass route Rb is calculated and presented. In this case, the bypass route Rb is set as a traveling route of a navigation system (not shown) of the vehicle 10. The vehicle 10 is manually driven or autonomously driven along the traveling route of the navigation system. In contrast, when there is no input that the occupant of the vehicle 10 wants to bypass the low emission zone LEZ, the bypass route Rb is not calculated.

In still another embodiment (not shown), whether or not the occupant wants to bypass the low emission zone LEZ is confirmed by the occupant of the vehicle 10 successively to or simultaneously with the presentation of the bypass route Rb. In this case, the occupant can input whether or not the occupant wants to bypass the low emission zone LEZ after confirming the bypass route Rb.

Next, a fourth embodiment of the present disclosure will be described referring to FIGS. 17 to 21. The fourth embodiment of the present disclosure is different from the first embodiment of the present disclosure in the following point. That is, as shown in FIG. 17, an electronic control unit 20 of a vehicle 10 according to the fourth embodiment of the present disclosure includes an SOC controller 20d. The SOC controller 20d controls the SOC of the battery 13. In an example, the SOC controller 20d executes SOC increase control for increasing the SOC of the battery 13.

In the fourth embodiment of the present disclosure, when determination is made that the vehicle 10 is within the entrance area ENA, a position determination unit 40a of the server 30 creates instruction data including a notification instruction and an SOC increase instruction, and transmits the instruction data to the vehicle 10. In a case where the vehicle 10 receives the instruction data, in the vehicle 10, the notification processing is executed as described above. The SOC increase control is executed successively to or simultaneously with the notification processing.

When determination is made that the vehicle 10 is within the entrance area ENA, the vehicle 10 enters or is likely to enter the low emission zone LEZ soon. Accordingly, thereafter, the EV mode may be continued, and the SOC of the battery 13 may continue to decrease. The operation of the internal combustion engine 11 may be stopped, and the SOC of the battery 13 may not be increased. As a result, the SOC of the battery 13 may be insufficient, and the vehicle 10 may not go out of the low emission zone LEZ.

Therefore, in the fourth embodiment of the present disclosure, when determination is made that the vehicle 10 is within the entrance area ENA, the SOC increase control is executed. As a result, before the vehicle 10 enters the low emission zone LEZ, the SOC of the battery 13 increases. Consequently, the vehicle 10 can continue the EV mode over a long time. Accordingly, the vehicle 10 can reliably pass through the low emission zone LEZ.

That is, in an example shown in FIG. 18, determination is made that the vehicle 10 is within the outside area OTA of the general zone GEZ until time tb1. In this case, the notification is stopped, the HV mode is executed, and the SOC increase control is stopped. Next, in a case where determination is made that the vehicle 10 enters the entrance area ENA at time tb1, the notification is performed, and the SOC increase control is executed. Next, in a case where determination is made that the vehicle 10 leaves the entrance area ENA and enters the low emission zone LEZ at time tb2, the notification is stopped, the EV mode is executed, and the SOC increase control is stopped.

The SOC increase control is executed, for example, by increasing an amount of electric power to be obtained by the internal combustion engine 11 driving the motor generator 12 operating as a power generator or a power generator (not shown) separate from the motor generator 12 more than a requested amount. When a part of the output of the internal combustion engine 11 is transmitted to the axle, and the rest of the output of the internal combustion engine 11 is transmitted to the power generator, in an example, the output of the internal combustion engine 11 that is transmitted to the axle is not changed, and the output of the internal combustion engine 11 that is transmitted to the power generator increases. In another example, as the output of the internal combustion engine 11 that is transmitted to the axle decreases, the output of the internal combustion engine 11 that is transmitted to the power generator increases, and the output of the motor generator 12 that is transmitted to the axle increases.

FIGS. 19 and 20 show a routine for executing control in the vehicle 10 in the fourth embodiment of the present disclosure. A difference from the routine shown in FIG. 8 is that, in the routine shown in FIGS. 19 and 20, the process progresses to Step S130 subsequently to Step S104, and determination is made whether or not the SOC increase instruction is included in the received instruction data. When determination is made that the SOC increase instruction is included, next, the process progresses to Step S131, and the SOC increase control is executed. In contrast, when determination is made that the SOC increase instruction is not included, next, the process progresses to Step S132, and the SOC increase control is stopped.

FIG. 21 shows a routine for executing control in the server 30 in the fourth embodiment of the present disclosure. A difference from the routine shown in FIG. 9 is that, in the routine shown in FIG. 21, the process progresses to Step S205b subsequently to Step S205, and the instruction data including the SOC increase instruction is created. In subsequent Step S207b, the instruction data including the notification instruction and the SOC increase instruction is transmitted to the vehicle 10.

Next, a fifth embodiment of the present disclosure will be described referring to FIGS. 22 to 26. The fifth embodiment of the present disclosure is different from the fourth embodiment of the present disclosure in the following point. That is, as shown in FIG. 22, an electronic control unit 20 of a vehicle 10 according to the fifth embodiment of the present disclosure includes an SOC acquisition unit 20e. The SOC acquisition unit 20e acquires the SOC of the battery 13, for example, from the processor 21.

In the fourth embodiment of the present disclosure described above, in a case where determination is made that the vehicle 10 enters the entrance area ENA, the SOC increase control is started. Note that, when the vehicle 10 enters the entrance area ENA, and when the SOC of the battery 13 is already high, there is less need to execute the SOC increase control.

Therefore, in the fifth embodiment of the present disclosure, when determination is made that the vehicle 10 is within the entrance area ENA, and when the SOC of the battery 13 is higher than a predetermined threshold value SOCx, the SOC increase control is not executed. In contrast, when the SOC of the battery 13 is lower than the threshold value SOCx, the SOC increase control is executed. As a result, it is possible to effectively use the fuel of the internal combustion engine 11 while maintaining the SOC of the battery 13 high.

That is, in an example shown in FIG. 23, determination is made that the vehicle 10 is within the outside area OTA of the general zone GEZ until time tc1. In this case, the notification is stopped, the HV mode is executed, and the SOC increase control is stopped. Next, in a case where determination is made that the vehicle 10 enters the entrance area ENA at time tc1, the notification is performed. In this case, when the SOC of the battery 13 is lower than the threshold value SOCx as indicated by a solid line in FIG. 23, the SOC increase control is started. As a result, the SOC increases. Next, at time tc2, in a case where determination is made that the vehicle 10 leaves the entrance area ENA and enters the low emission zone LEZ, the notification is stopped, the EV mode is executed, and the SOC increase control is stopped. In contrast, at time tc1, when the SOC of the battery 13 is higher than the threshold value SOCx as indicated by a broken line in FIG. 23, the SOC increase control is not started.

FIGS. 24 and 25 show a routine for executing control in the vehicle 10 in the fifth embodiment of the present disclosure. A difference from the routine shown in FIGS. 19 and 20 is that, in the routine shown in FIGS. 24 and 25, the process progresses to Step S100a subsequently to Step S100, and the SOC of the battery 13 is acquired. In subsequent Step S101a, the positional information of the vehicle 10 and the SOC of the battery 13 are transmitted to the server 30.

FIG. 26 shows a routine for executing control in the server 30 in the fifth embodiment of the present disclosure. A difference from the routine shown in FIG. 21 is that, in the routine shown in FIG. 26, first, in Step S200a, determination is made whether or not the positional information of the vehicle 10 and the SOC of the battery 13 are received from the vehicle 10. When determination is made that the positional information of the vehicle 10 and the SOC are not received, the process cycle ends. In a case where determination is made that the positional information of the vehicle 10 and the SOC are received, the process progresses to Step S201.

The process progresses to Step S205c subsequently to Step S205, and determination is made whether or not the SOC of the battery 13 is lower than the threshold value SOCx. When SOC < SOCx, next, the process progresses to Step S205b, and the SOC increase instruction is created. In contrast, when SOC ≥ SOCx, the SOC increase instruction is not created, and next, the process progresses to Step S207.

In the fifth embodiment of the present disclosure described above, the determination about whether or not the SOC of the battery 13 is higher than the threshold value SOCx is performed in the server 30. In another embodiment (not shown), the determination is performed in the vehicle 10. In this case, there is no need to transmit the SOC of the battery 13 to the server 30.

Next, another embodiment of the SOC increase control will be described referring to FIG. 27. The SOC increase control is executed in Step S131 of FIG. 20 or in Step S131 of FIG. 25.

As shown in FIG. 27, when the vehicle 10 travels along a route R and passes through the low emission zone LEZ, in a case where an SOC when the vehicle 10 enters the low emission zone LEZ is represented by SOCin and an SOC decrease amount needed when the vehicle 10 passes through the low emission zone LEZ is represented by dSOC1, SOCin ≥ dSOC1 needs to be established for the vehicle 10 passing through the low emission zone LEZ. In another embodiment (not shown), SOCin ≥ SOClez + $\alpha$ ($\alpha$ > 0) needs to be established.

In other words, when SOCin ≥ SOClez, the SOC increase control is not needed, and when SOCin < SOClez, the SOC increase control is needed. Therefore, in another embodiment of the SOC increase control, when SOCin ≥ SOClez, the SOC increase control is not executed, and when SOCin < SOClez, the SOC increase control is executed.

When the SOC increase control is executed, an SOC that should be increased by the SOC increase control, that is, a shortage dSOCr is represented by the following expression.

$$\mathrm{dSOCr} = \mathrm{SOClez} - \mathrm{SOCin}$$

In a case where an SOC of the battery 13 at a current location is represented by SOCc, and an SOC decrease amount needed until the vehicle 10 enters the low emission zone LEZ from the current location is represented by dSOC2, SOCin is represented by the following expression.

$$\mathrm{SOCin} = \mathrm{SOCc} - \mathrm{dSOC2}$$

On the other hand, in a case where a power generation ability of the vehicle 10 or an SOC increase rate is Q (for example, kw), a time dtr needed for obtaining the shortage SOCr is represented by the following expression.

$$\mathrm{dtr} = \mathrm{SOCr}/\mathrm{Q}$$

Then, in a case where the SOC increase control starts when a time dt0 needed until the vehicle 10 enters the low emission zone LEZ from the current location is longer than the above-described time dtr (dt0 > dtr), the SOC may become excessive. Therefore, in another embodiment of the SOC increase control, the vehicle 10 approaches the low emission zone LEZ, and when dt0 = dtr, the SOC increase control is started. The SOC decrease amounts dSOC1, dSOC2 and the time dt0 are estimated based on a traveling distance, a traveling time, or the like.

In various embodiments of the present disclosure described above, the determination about whether or not the vehicle 10 is within the low emission zone LEZ is performed in the server 30. In another embodiment (not shown), the electronic control unit 20 of the vehicle 10 includes a position determination unit, and the determination is performed in the vehicle 10. In this case, in an example, the positional information of the low emission zone LEZ is stored in the vehicle 10. In another example, the positional information of the low emission zone LEZ is stored in the server 30, and the vehicle 10 receives the positional information of the low emission zone LEZ from the server 30 and performs the determination. The same applies to the determination about whether or not the vehicle 10 is within the entrance area ENA.

In still another embodiment (not shown), various kinds of control included in the embodiments of the present disclosure described above are carried out individually or in combination.

**Claims**

1. A control system (1) for a hybrid vehicle (10) that includes an internal combustion engine (11) and an electric motor (12), and switches a driving mode between an EV mode where operation of the internal combustion engine (11) is stopped and the electric motor (12) is operated and an HV mode where the internal combustion engine (11) and the electric motor (12) are operated, the control system (1) comprising:

a position determination unit (40a) configured to determine a position of the hybrid vehicle (10);
a driving controller (20b) configured to stop the operation of the internal combustion engine (11) when determination is made that the hybrid vehicle (10) is within a low emission zone (LEZ) where the operation of the internal combustion engine (11) is to be restricted; and
an HMI controller (20c) configured to execute notification processing of notifying an occupant of the hybrid vehicle (10) that the hybrid vehicle (10) enters or is likely to enter the low emission zone (LEZ) soon when determination is made that the hybrid vehicle (10) is within an entrance area (ENA) adjacent to a boundary (GF) of the low emission zone (LEZ) outside the low emission zone (LEZ).

**2.** The control system (1) according to claim 1, wherein the HMI controller (20c) is configured to confirm with the occupant of the hybrid vehicle (10) whether or not the occupant wants to bypass the low emission zone (LEZ) while executing the notification processing.

**3.** The control system (1) according to claim 1 or 2, further comprising a bypass route calculation unit (40b) configured to calculate a bypass route (Rb) for bypassing the low emission zone (LEZ),
wherein the HMI controller (20c) is configured to present the bypass route (Rb) to the occupant while executing the notification processing.

**4.** The control system (1) according to any one of claims 1 to 3, further comprising an SOC controller (20d) configured to execute SOC increase control for increasing a charging rate of a battery (13) of the hybrid vehicle (10) when determination is made that the hybrid vehicle (10) is within the entrance area (ENA).

**5.** The control system (1) according to claim 4, wherein the SOC controller (20d) is configured to, when determination is made that the hybrid vehicle (10) is within the entrance area (ENA), not execute the SOC increase control when determination is made that the charging rate of the battery (13) of the hybrid vehicle (10) is higher than a predetermined threshold value, and execute the SOC increase control when determination is made that the charging rate of the battery (13) is lower than the threshold value.

**6.** A control method for a hybrid vehicle (10) that includes an internal combustion engine (11) and an electric motor (12), and switches a driving mode between an EV mode where operation of the internal combustion engine (11) is stopped and the electric motor (12) is operated and an HV mode where the internal combustion engine (11) and the electric motor (12) are operated, the control method comprising:

determining a position of the hybrid vehicle (10);
stopping the operation of the internal combustion engine (11) when determination is made that the hybrid vehicle (10) is within a low emission zone (LEZ) where the operation of the internal combustion engine (11) is to be restricted; and
executing notification processing of notifying an occupant of the hybrid vehicle (10) that the hybrid vehicle (10) enters or is likely to enter the low emission zone (LEZ) soon when determination is made that the hybrid vehicle (10) is within an entrance area (ENA) adjacent to a boundary (GF) of the low emission zone (LEZ) outside the low emission zone (LEZ).

FIG. 1

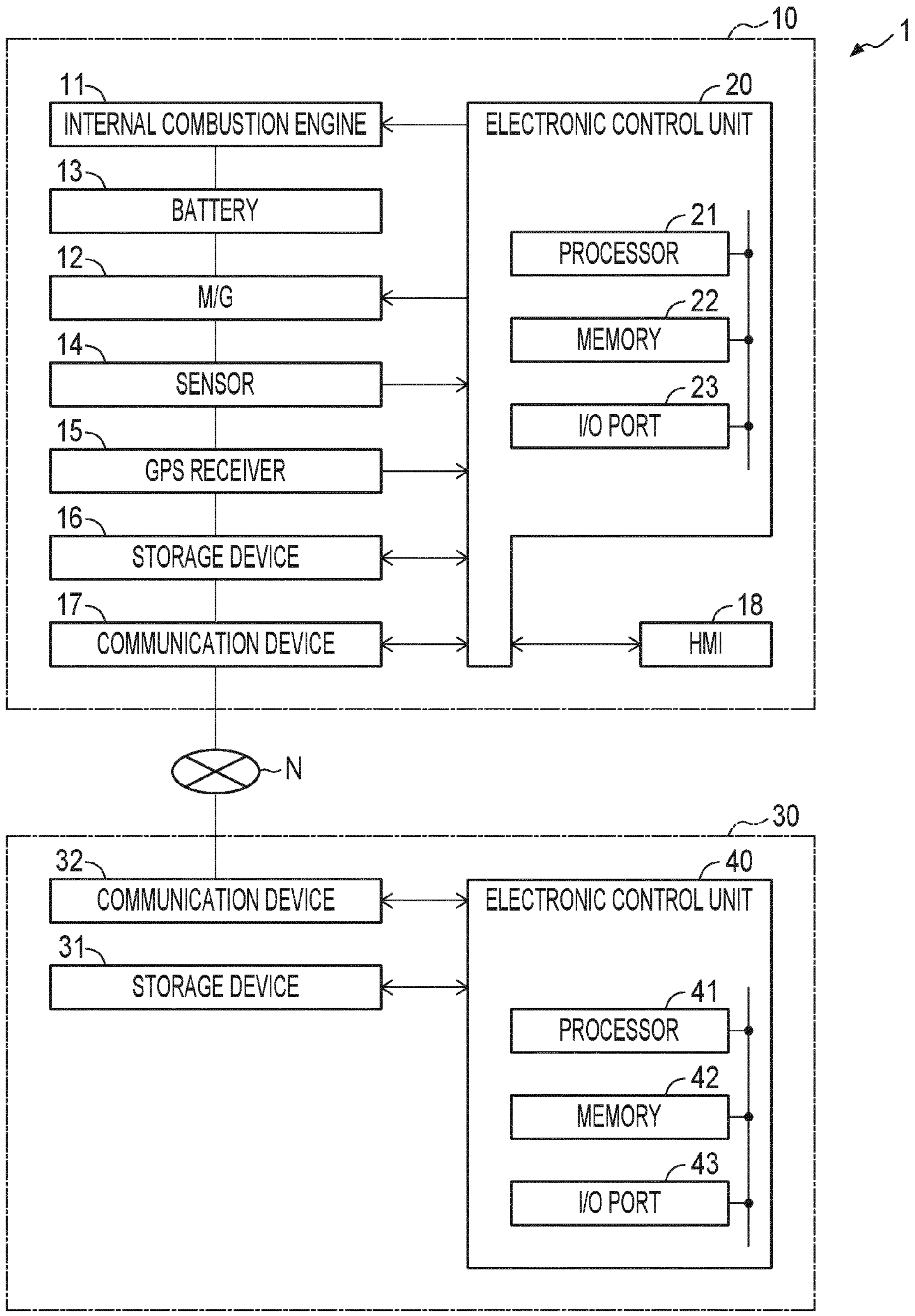
10
1
11
INTERNAL COMBUSTION ENGINE
20
ELECTRONIC CONTROL UNIT
13
BATTERY
21
PROCESSOR
12
M/G
22
MEMORY
14
SENSOR
23
I/O PORT
15
GPS RECEIVER
16
STORAGE DEVICE
17
COMMUNICATION DEVICE
18
HMI
N
30
32
COMMUNICATION DEVICE
40
ELECTRONIC CONTROL UNIT
31
STORAGE DEVICE
41
PROCESSOR
42
MEMORY
43
I/O PORT

FIG. 2

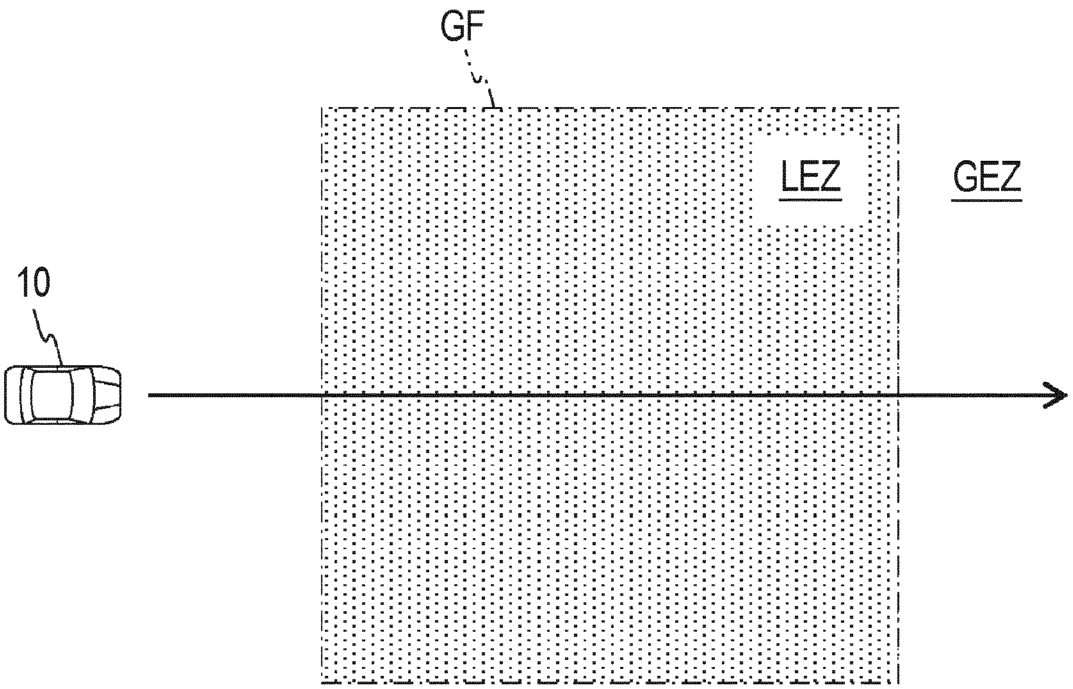


FIG. 3

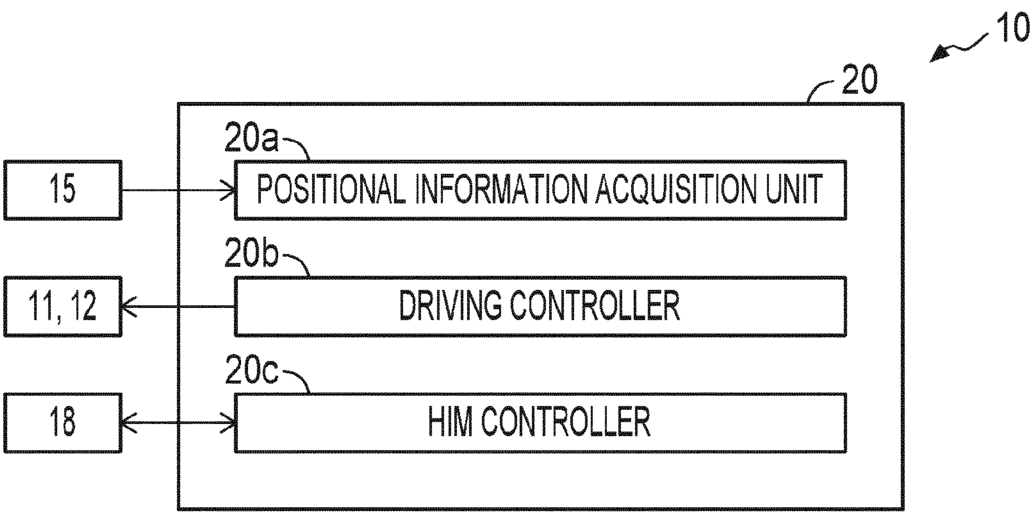


FIG. 4

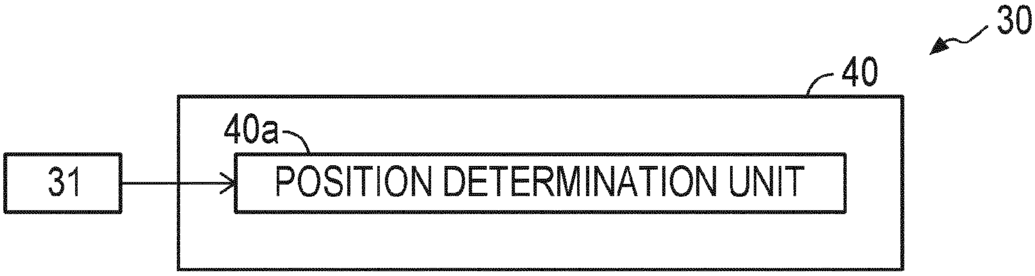

FIG. 5

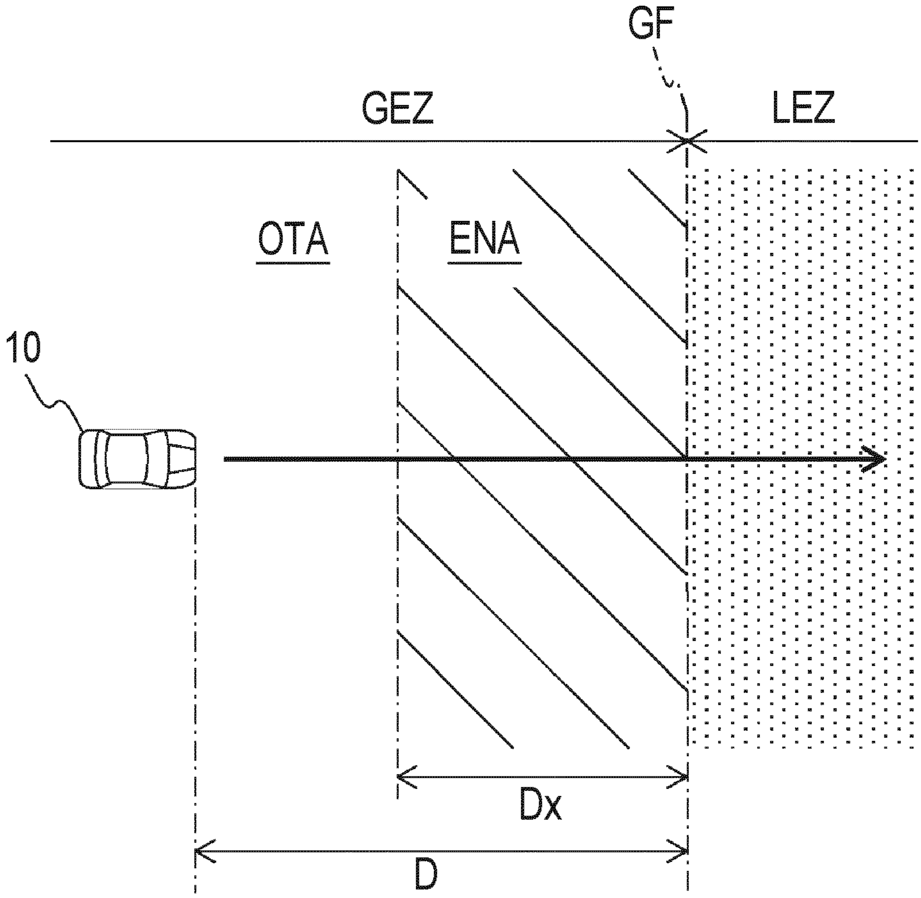
GF
GEZ
LEZ
OTA
ENA
10
Dx
D

FIG. 6

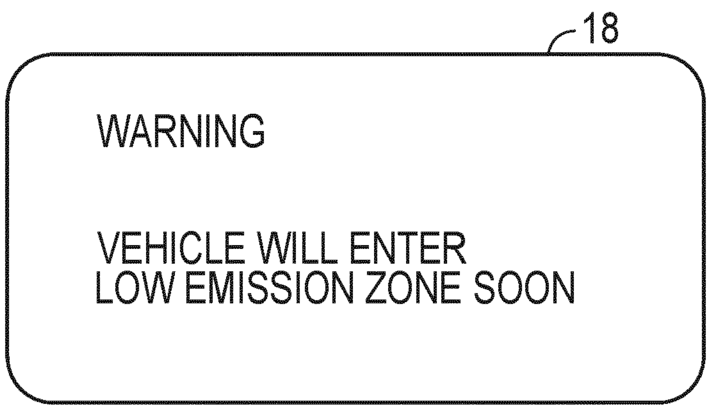
18
WARNING
VEHICLE WILL ENTER
LOW EMISSION ZONE SOON

FIG. 7

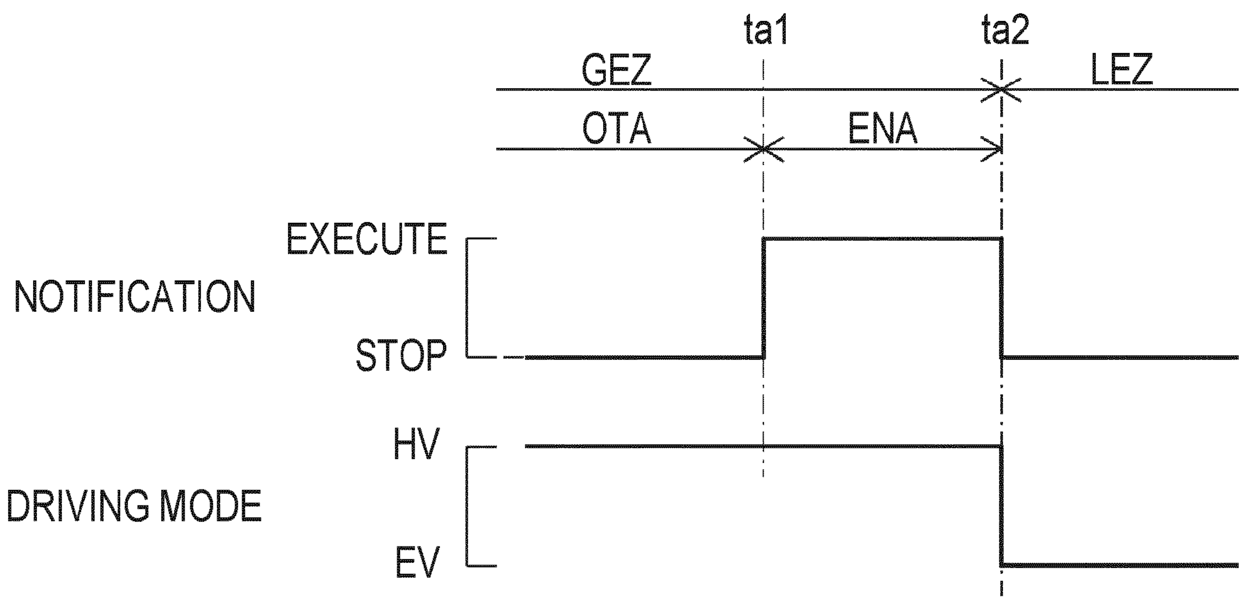
ta1
ta2
GEZ
LEZ
OTA
ENA
EXECUTE
NOTIFICATION
STOP
HV
DRIVING MODE
EV

FIG. 8

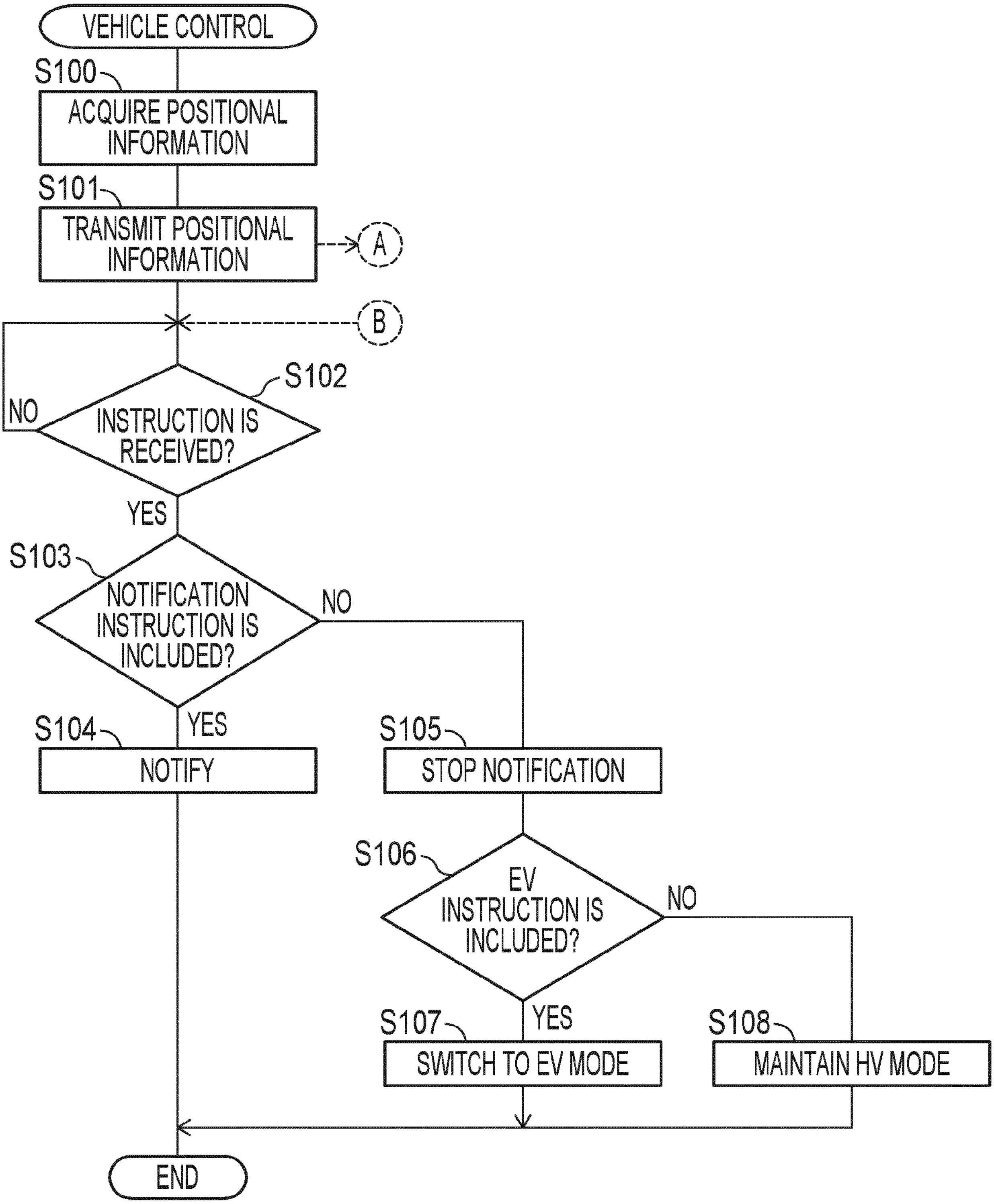
VEHICLE CONTROL
S100
ACQUIRE POSITIONAL INFORMATION
S101
TRANSMIT POSITIONAL INFORMATION
A
B
S102
INSTRUCTION IS RECEIVED?
NO
YES
S103
NOTIFICATION INSTRUCTION IS INCLUDED?
NO
YES
S104
NOTIFY
S105
STOP NOTIFICATION
S106
EV INSTRUCTION IS INCLUDED?
NO
YES
S107
SWITCH TO EV MODE
S108
MAINTAIN HV MODE
END

FIG. 9

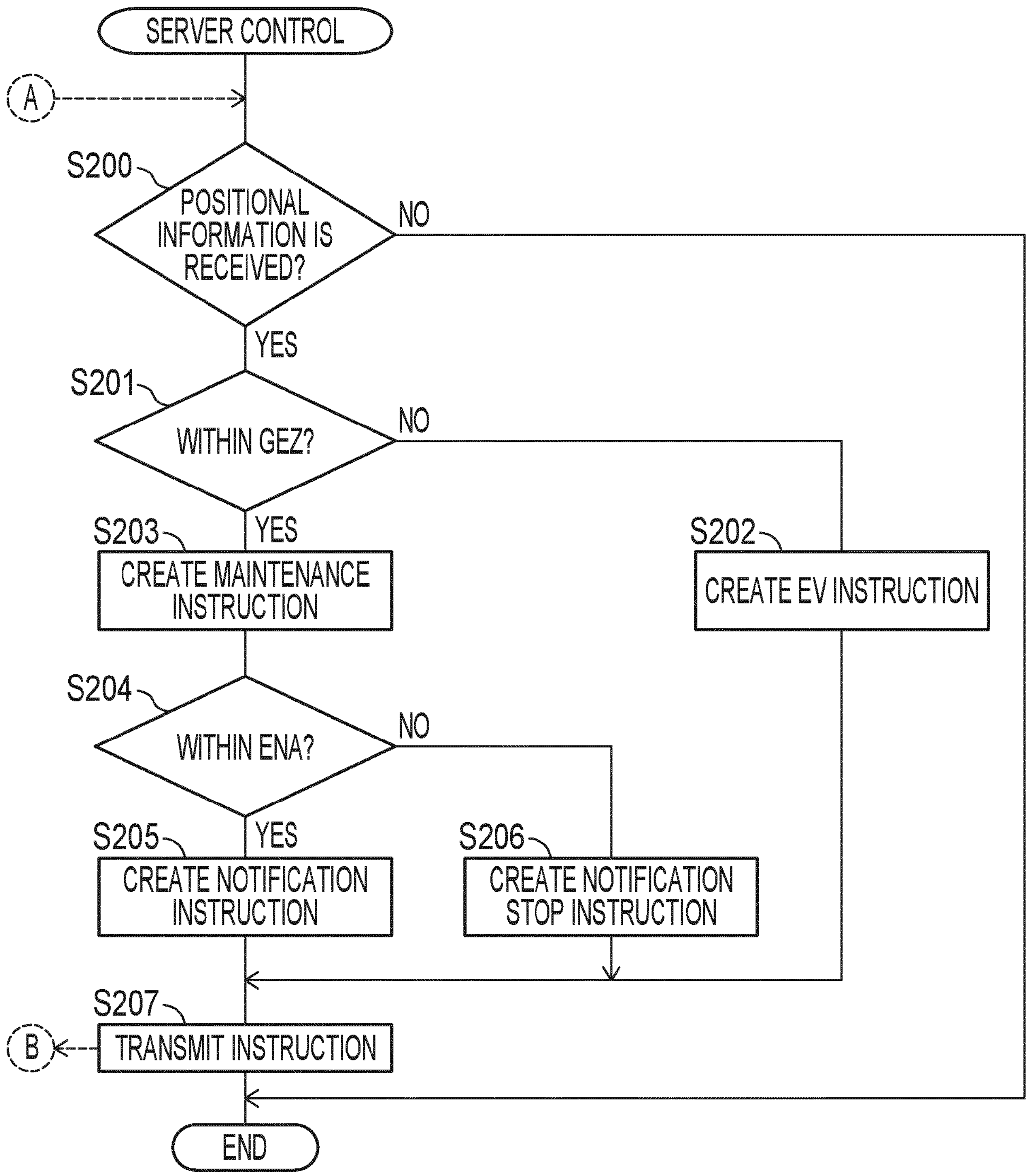
SERVER CONTROL
A
S200
POSITIONAL INFORMATION IS RECEIVED?
NO
YES
S201
WITHIN GEZ?
NO
YES
S203
CREATE MAINTENANCE INSTRUCTION
S202
CREATE EV INSTRUCTION
S204
WITHIN ENA?
NO
YES
S205
CREATE NOTIFICATION INSTRUCTION
S206
CREATE NOTIFICATION STOP INSTRUCTION
S207
TRANSMIT INSTRUCTION
B
END

FIG. 10

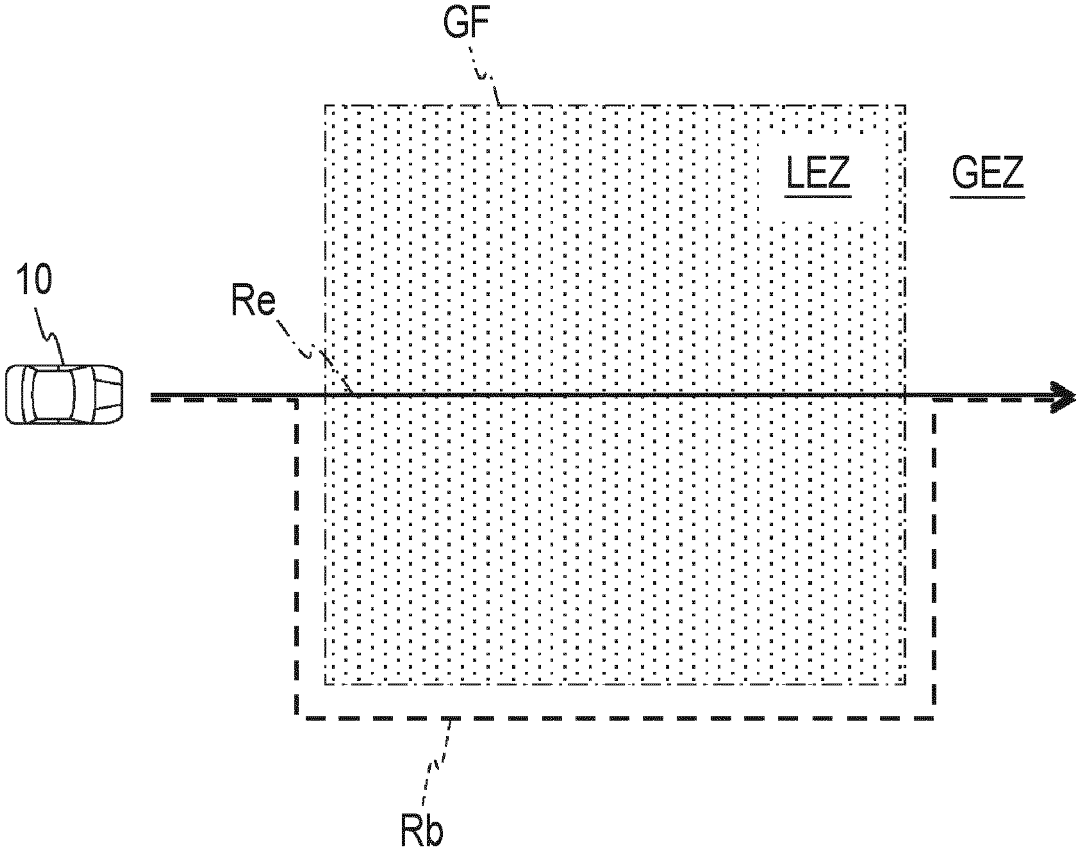
GF
LEZ
GEZ
10
Re
Rb

FIG. 11

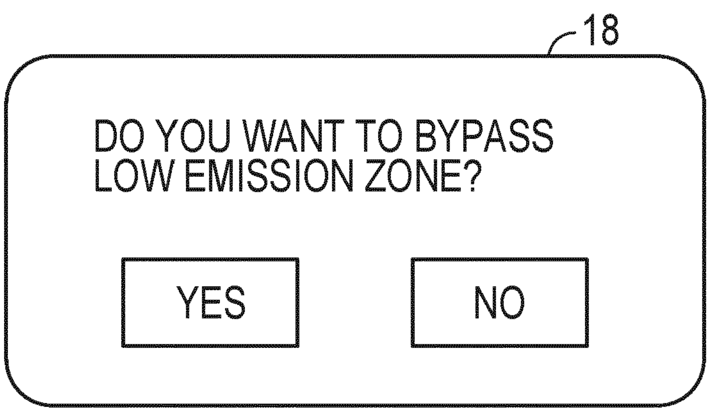
18
DO YOU WANT TO BYPASS LOW EMISSION ZONE?
YES
NO

FIG. 12

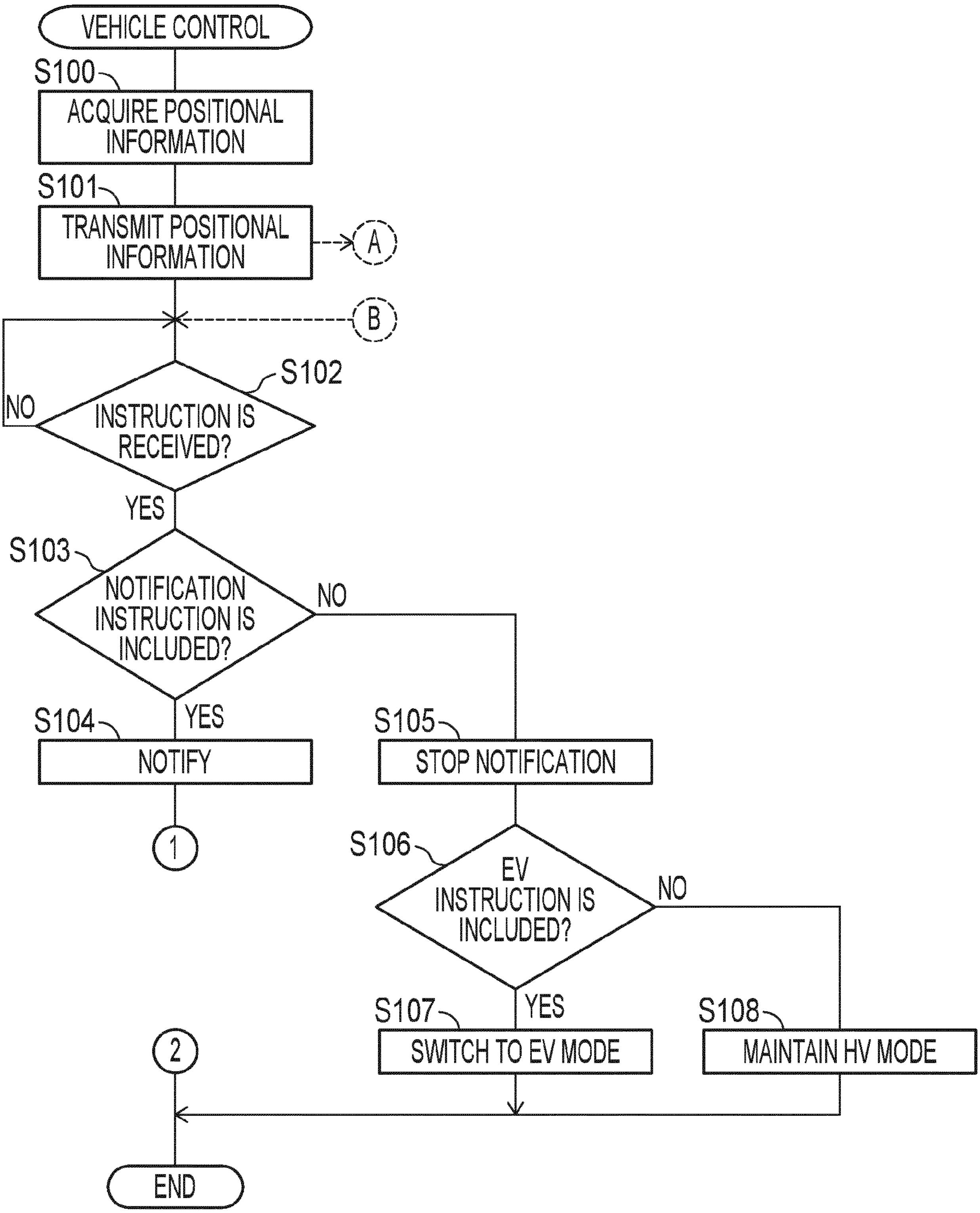

VEHICLE CONTROL
S100
ACQUIRE POSITIONAL INFORMATION
S101
TRANSMIT POSITIONAL INFORMATION
A
B
S102
INSTRUCTION IS RECEIVED?
NO
YES
S103
NOTIFICATION INSTRUCTION IS INCLUDED?
NO
YES
S104
NOTIFY
1
S105
STOP NOTIFICATION
S106
EV INSTRUCTION IS INCLUDED?
NO
YES
S107
SWITCH TO EV MODE
S108
MAINTAIN HV MODE
2
END

FIG. 13

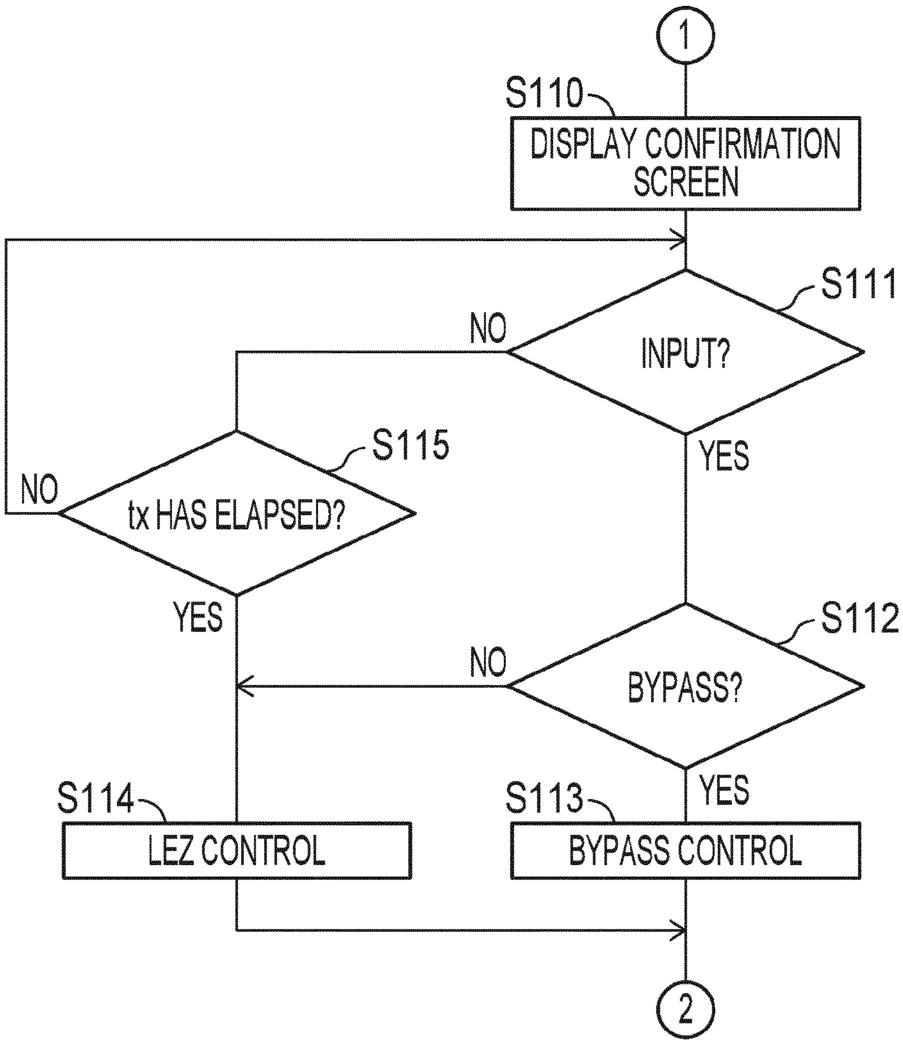
1
S110
DISPLAY CONFIRMATION SCREEN
S111
INPUT?
NO
YES
S115
tx HAS ELAPSED?
NO
YES
S112
BYPASS?
NO
YES
S114
LEZ CONTROL
S113
BYPASS CONTROL
2

FIG. 14

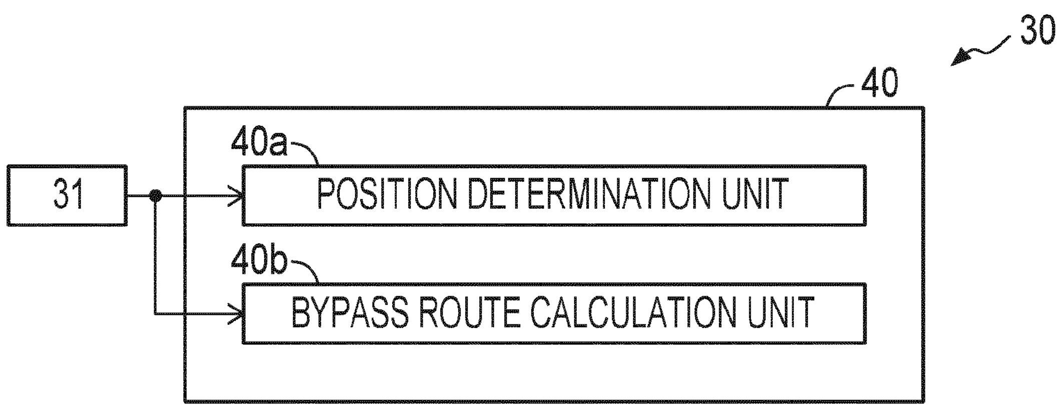
30
40
40a
31
POSITION DETERMINATION UNIT
40b
BYPASS ROUTE CALCULATION UNIT

FIG. 15

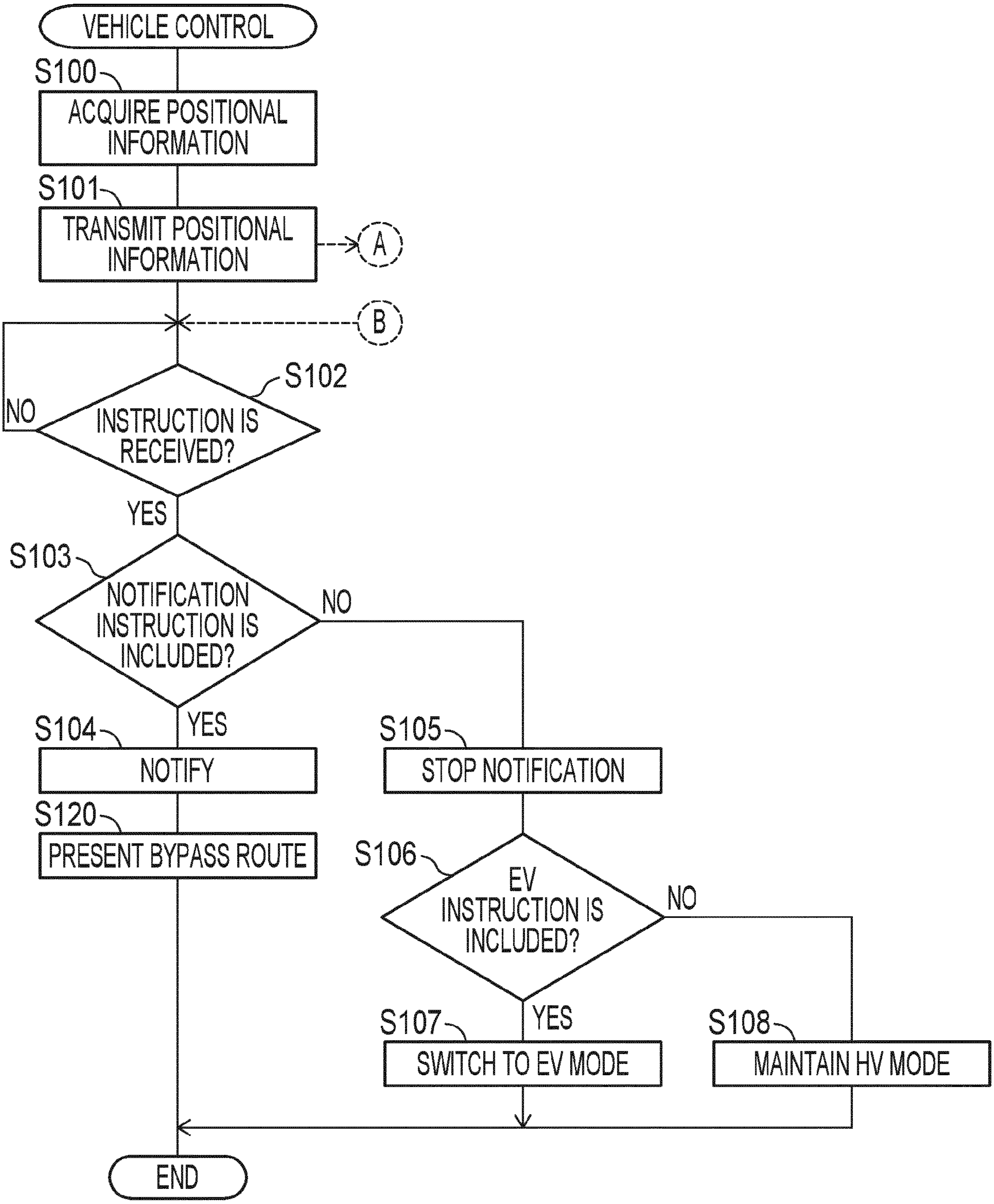
VEHICLE CONTROL
S100
ACQUIRE POSITIONAL INFORMATION
S101
TRANSMIT POSITIONAL INFORMATION
A
B
S102
INSTRUCTION IS RECEIVED?
NO
YES
S103
NOTIFICATION INSTRUCTION IS INCLUDED?
NO
YES
S104
NOTIFY
S120
PRESENT BYPASS ROUTE
S105
STOP NOTIFICATION
S106
EV INSTRUCTION IS INCLUDED?
NO
YES
S107
SWITCH TO EV MODE
S108
MAINTAIN HV MODE
END

FIG. 16

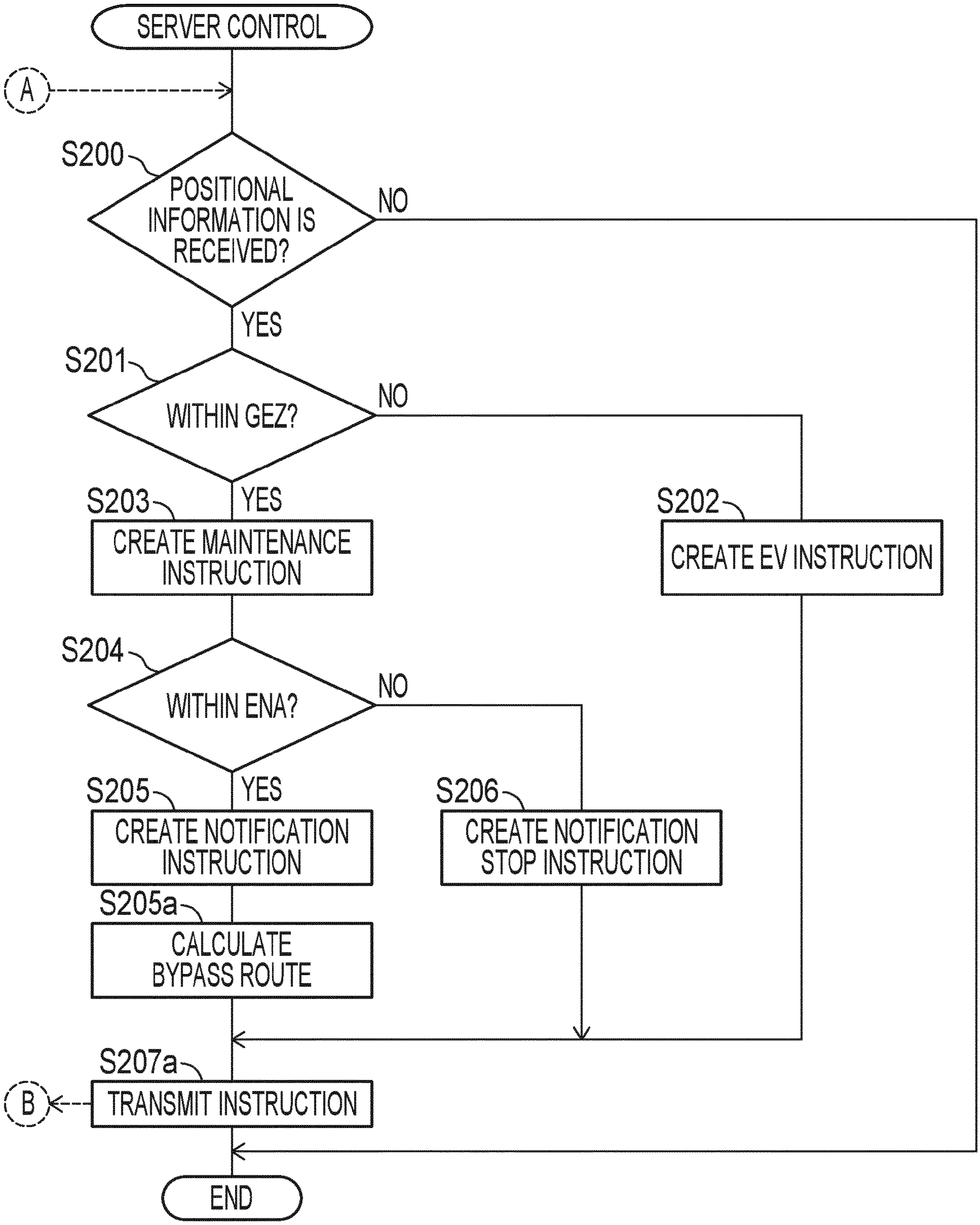
SERVER CONTROL
A
S200
POSITIONAL INFORMATION IS RECEIVED?
NO
YES
S201
WITHIN GEZ?
NO
YES
S203
CREATE MAINTENANCE INSTRUCTION
S202
CREATE EV INSTRUCTION
S204
WITHIN ENA?
NO
YES
S205
CREATE NOTIFICATION INSTRUCTION
S206
CREATE NOTIFICATION STOP INSTRUCTION
S205a
CALCULATE BYPASS ROUTE
S207a
TRANSMIT INSTRUCTION
B
END

FIG. 17

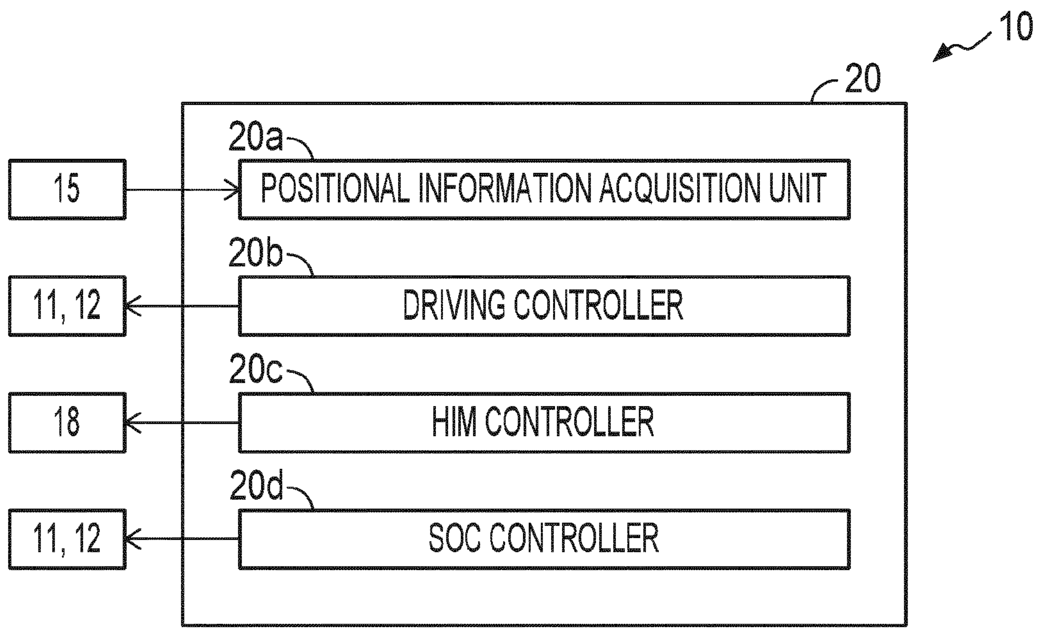
10
20
20a
15
POSITIONAL INFORMATION ACQUISITION UNIT
20b
11, 12
DRIVING CONTROLLER
20c
18
HIM CONTROLLER
20d
11, 12
SOC CONTROLLER

FIG. 18

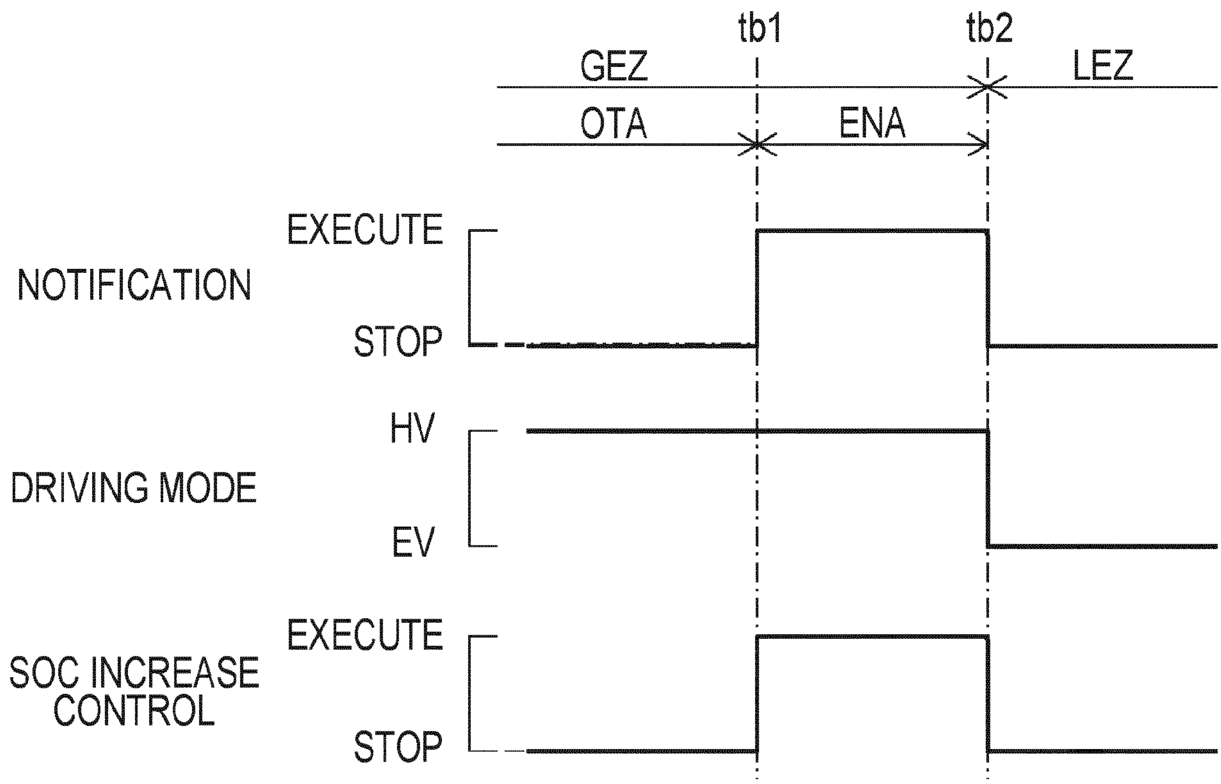
tb1
tb2
GEZ
LEZ
OTA
ENA
NOTIFICATION
EXECUTE
STOP
DRIVING MODE
HV
EV
SOC INCREASE CONTROL
EXECUTE
STOP

FIG. 19

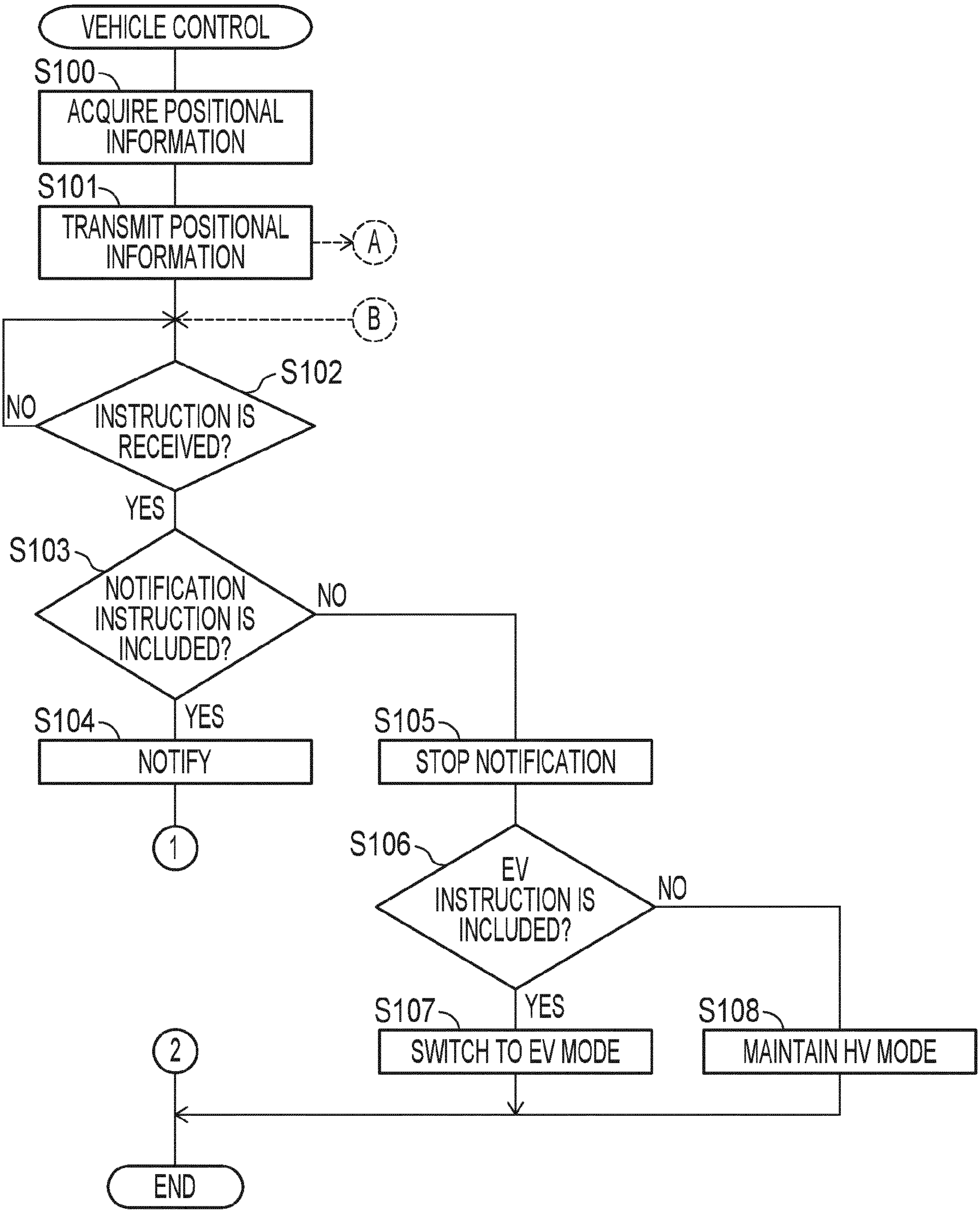
VEHICLE CONTROL
S100
ACQUIRE POSITIONAL INFORMATION
S101
TRANSMIT POSITIONAL INFORMATION
A
B
S102
INSTRUCTION IS RECEIVED?
NO
YES
S103
NOTIFICATION INSTRUCTION IS INCLUDED?
NO
YES
S104
NOTIFY
1
S105
STOP NOTIFICATION
S106
EV INSTRUCTION IS INCLUDED?
NO
YES
S107
SWITCH TO EV MODE
S108
MAINTAIN HV MODE
2
END

FIG. 20

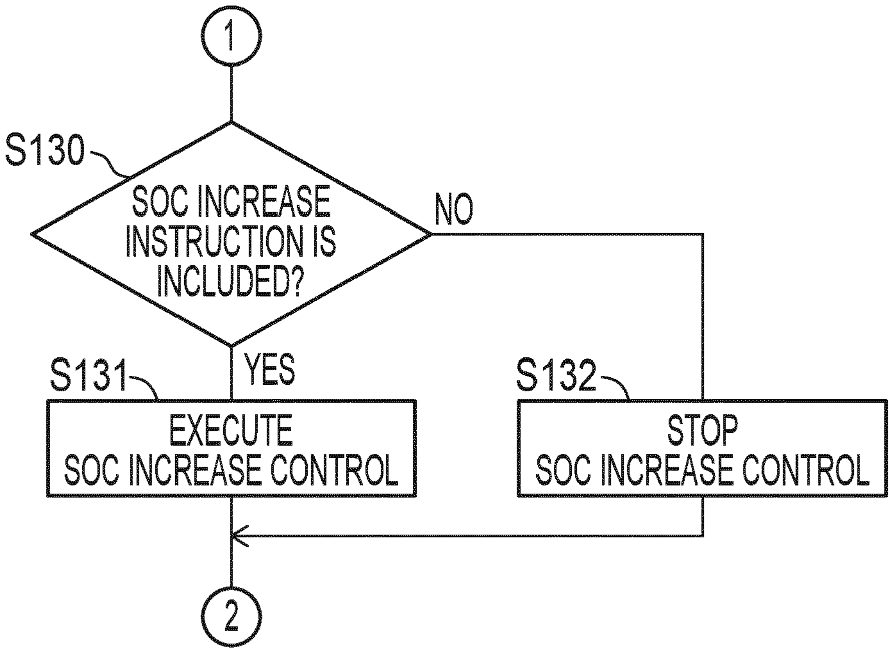
1
S130
SOC INCREASE INSTRUCTION IS INCLUDED?
NO
YES
S131
EXECUTE SOC INCREASE CONTROL
S132
STOP SOC INCREASE CONTROL
2

FIG. 21

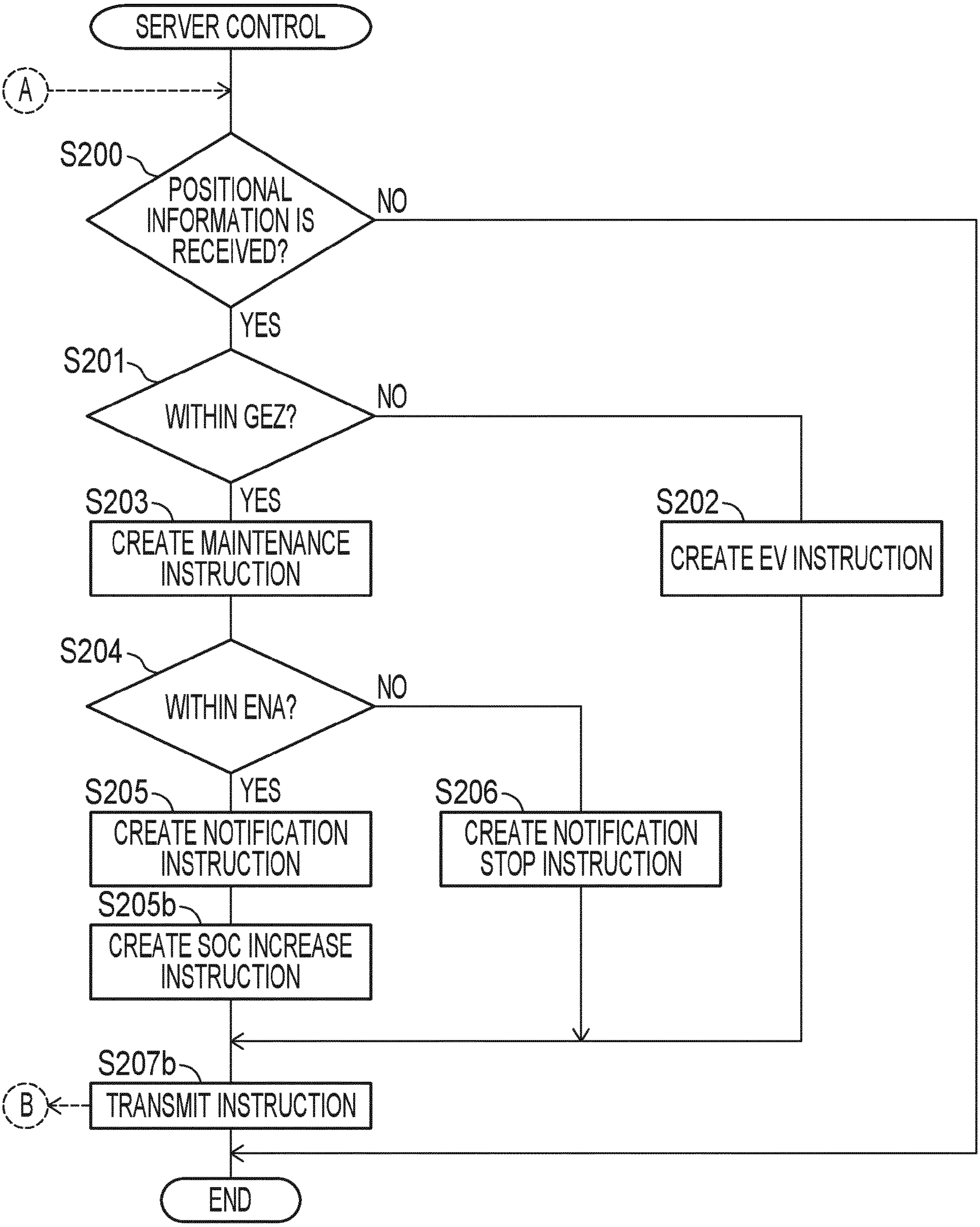
SERVER CONTROL
A
S200
POSITIONAL INFORMATION IS RECEIVED?
NO
YES
S201
WITHIN GEZ?
NO
YES
S203
CREATE MAINTENANCE INSTRUCTION
S202
CREATE EV INSTRUCTION
S204
WITHIN ENA?
NO
YES
S205
CREATE NOTIFICATION INSTRUCTION
S206
CREATE NOTIFICATION STOP INSTRUCTION
S205b
CREATE SOC INCREASE INSTRUCTION
S207b
B
TRANSMIT INSTRUCTION
END

FIG. 22

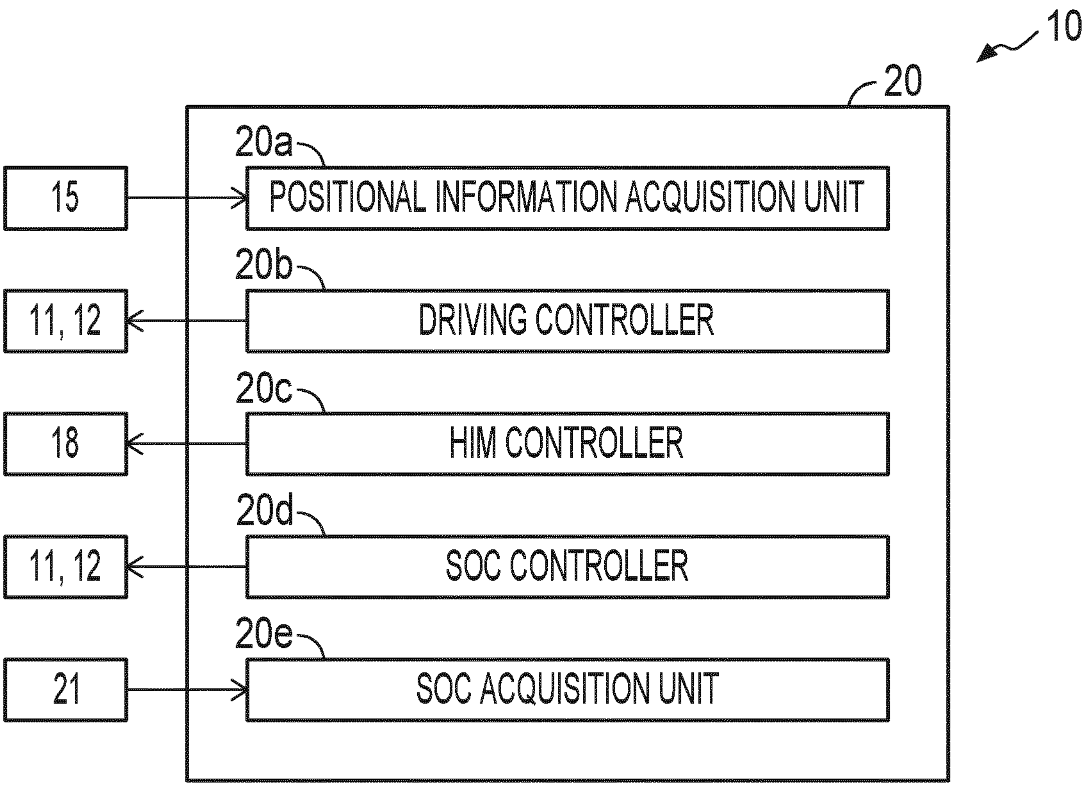
10
20
20a
15
POSITIONAL INFORMATION ACQUISITION UNIT
20b
11, 12
DRIVING CONTROLLER
20c
18
HIM CONTROLLER
20d
11, 12
SOC CONTROLLER
20e
21
SOC ACQUISITION UNIT

FIG. 23

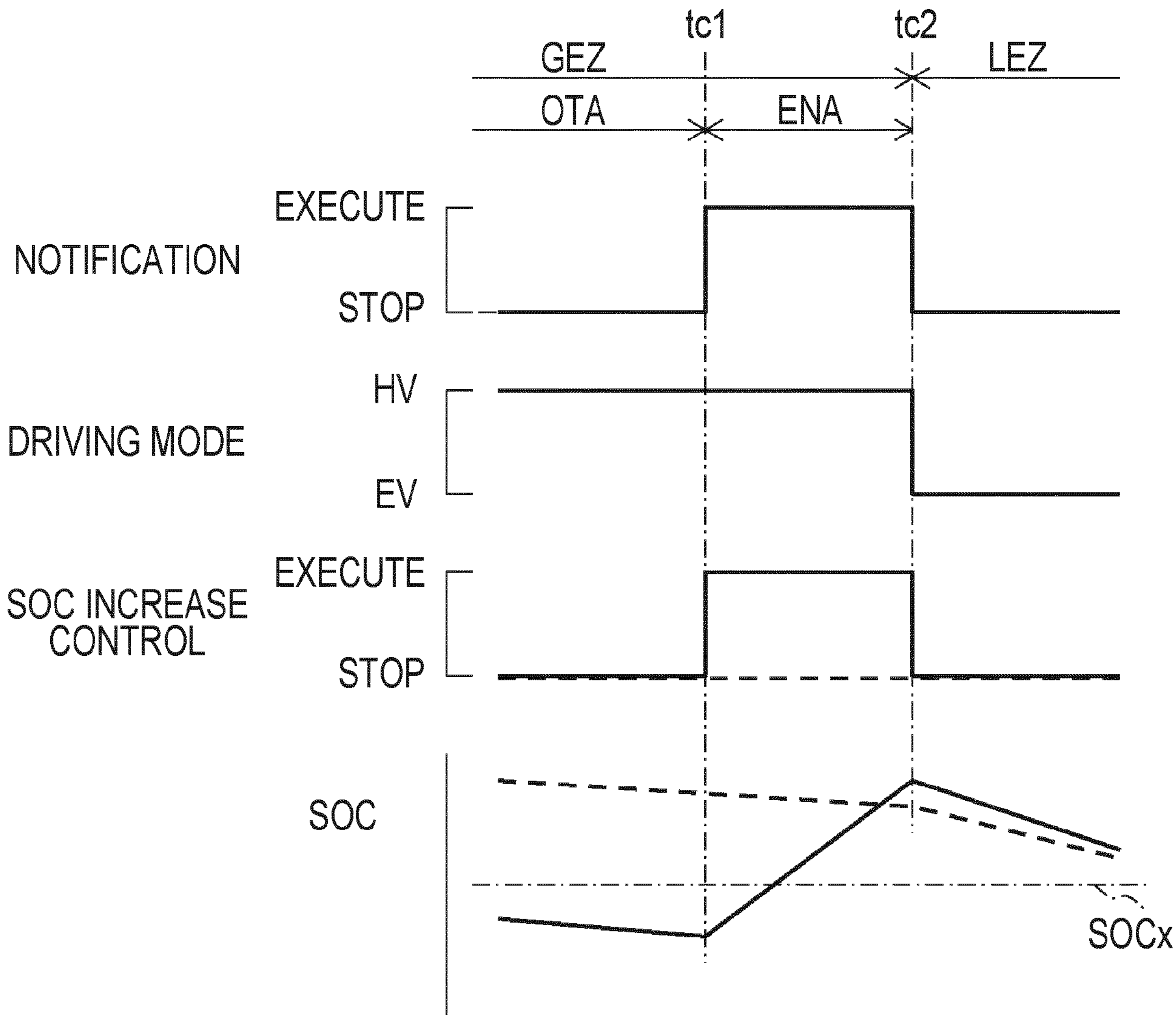
tc1
tc2
GEZ
LEZ
OTA
ENA
NOTIFICATION
EXECUTE
STOP
DRIVING MODE
HV
EV
SOC INCREASE CONTROL
EXECUTE
STOP
SOC
SOCx

FIG. 24

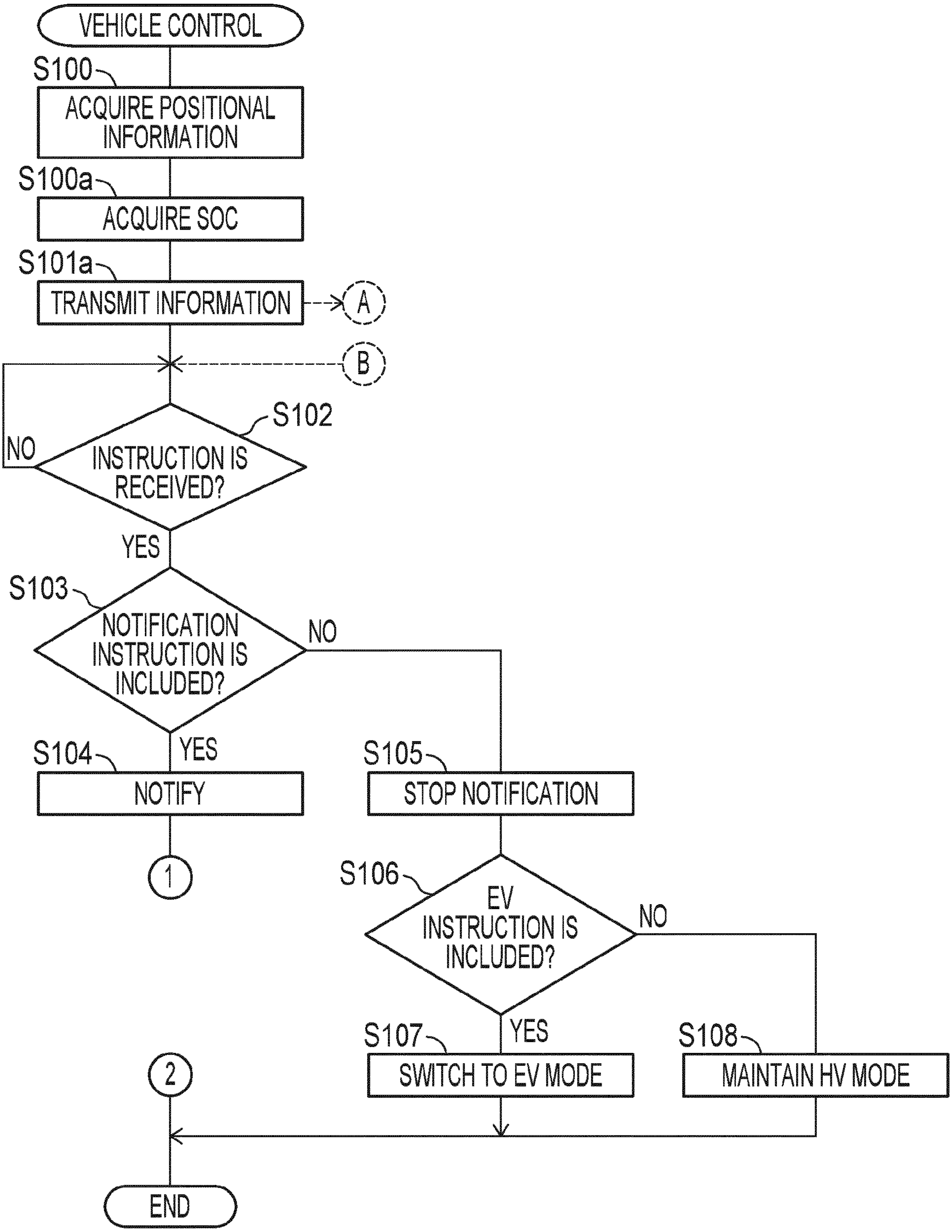
VEHICLE CONTROL
S100
ACQUIRE POSITIONAL INFORMATION
S100a
ACQUIRE SOC
S101a
TRANSMIT INFORMATION
A
B
S102
INSTRUCTION IS RECEIVED?
NO
YES
S103
NOTIFICATION INSTRUCTION IS INCLUDED?
NO
YES
S104
NOTIFY
S105
STOP NOTIFICATION
1
S106
EV INSTRUCTION IS INCLUDED?
NO
YES
S107
SWITCH TO EV MODE
S108
MAINTAIN HV MODE
2
END

FIG. 25

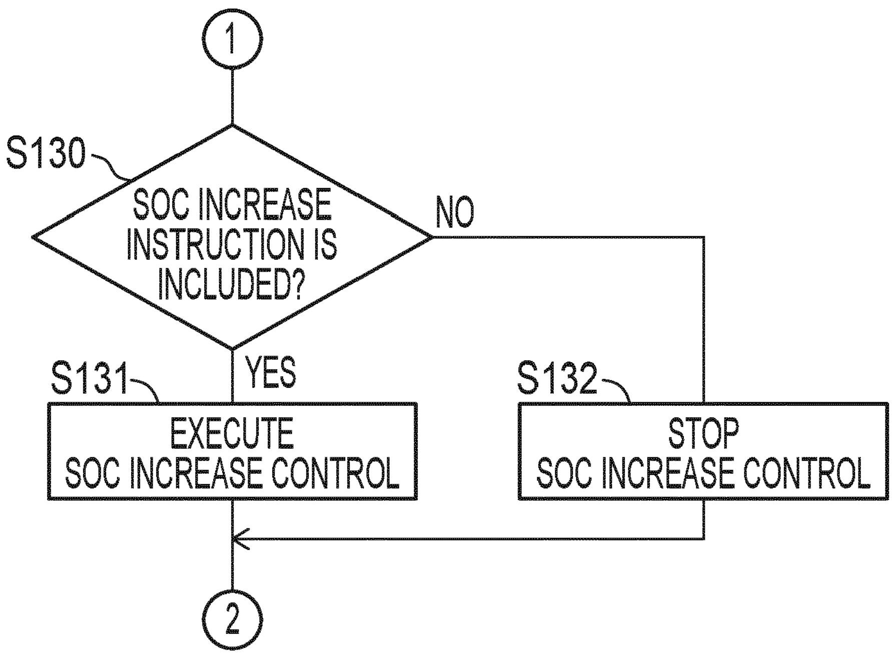
1
S130
SOC INCREASE INSTRUCTION IS INCLUDED?
NO
YES
S131
EXECUTE SOC INCREASE CONTROL
S132
STOP SOC INCREASE CONTROL
2

FIG. 26

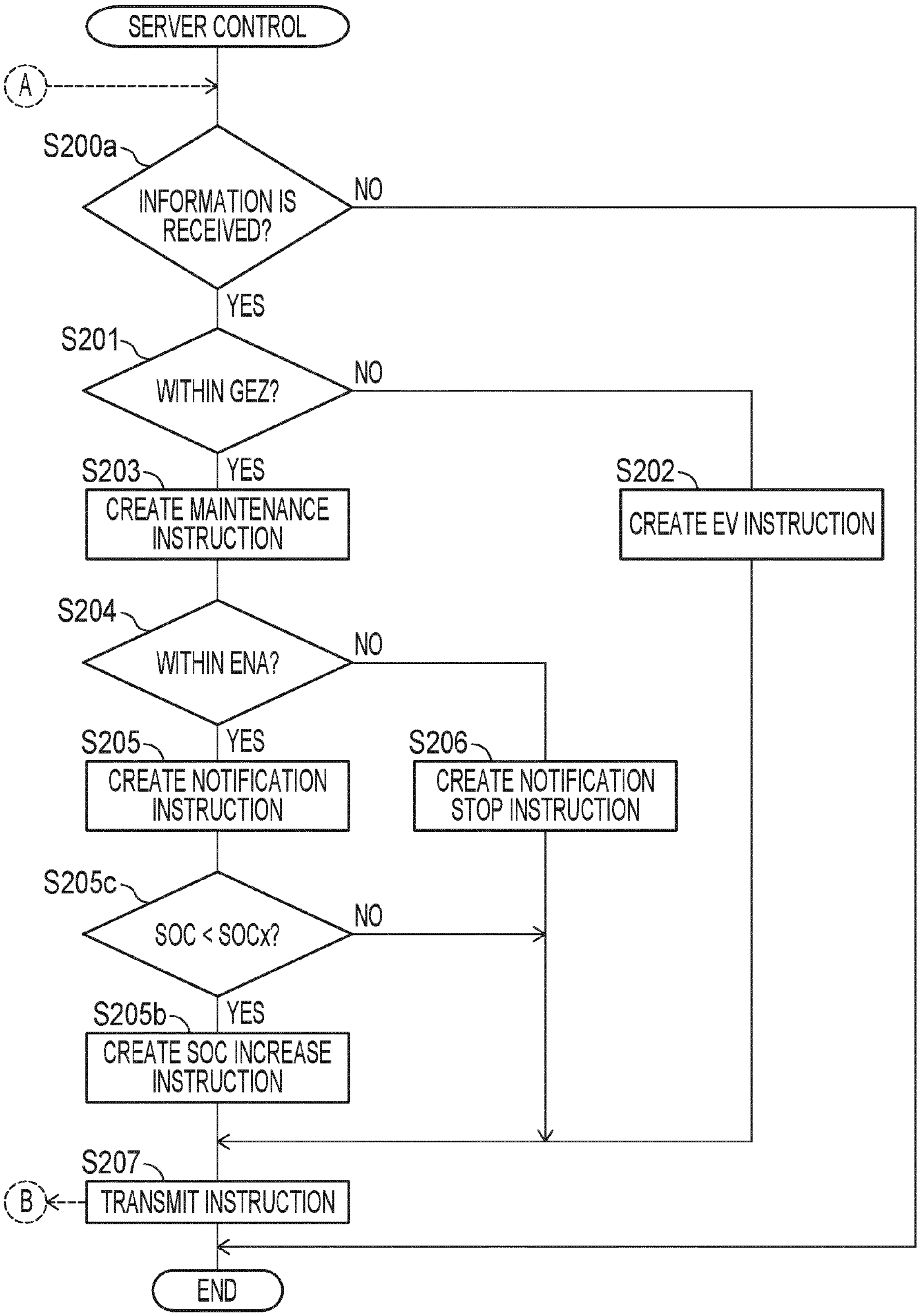
SERVER CONTROL
A
S200a
INFORMATION IS RECEIVED?
NO
YES
S201
WITHIN GEZ?
NO
YES
S203
CREATE MAINTENANCE INSTRUCTION
S202
CREATE EV INSTRUCTION
S204
WITHIN ENA?
NO
YES
S205
CREATE NOTIFICATION INSTRUCTION
S206
CREATE NOTIFICATION STOP INSTRUCTION
S205c
SOC < SOCx?
NO
YES
S205b
CREATE SOC INCREASE INSTRUCTION
S207
TRANSMIT INSTRUCTION
B
END

FIG. 27

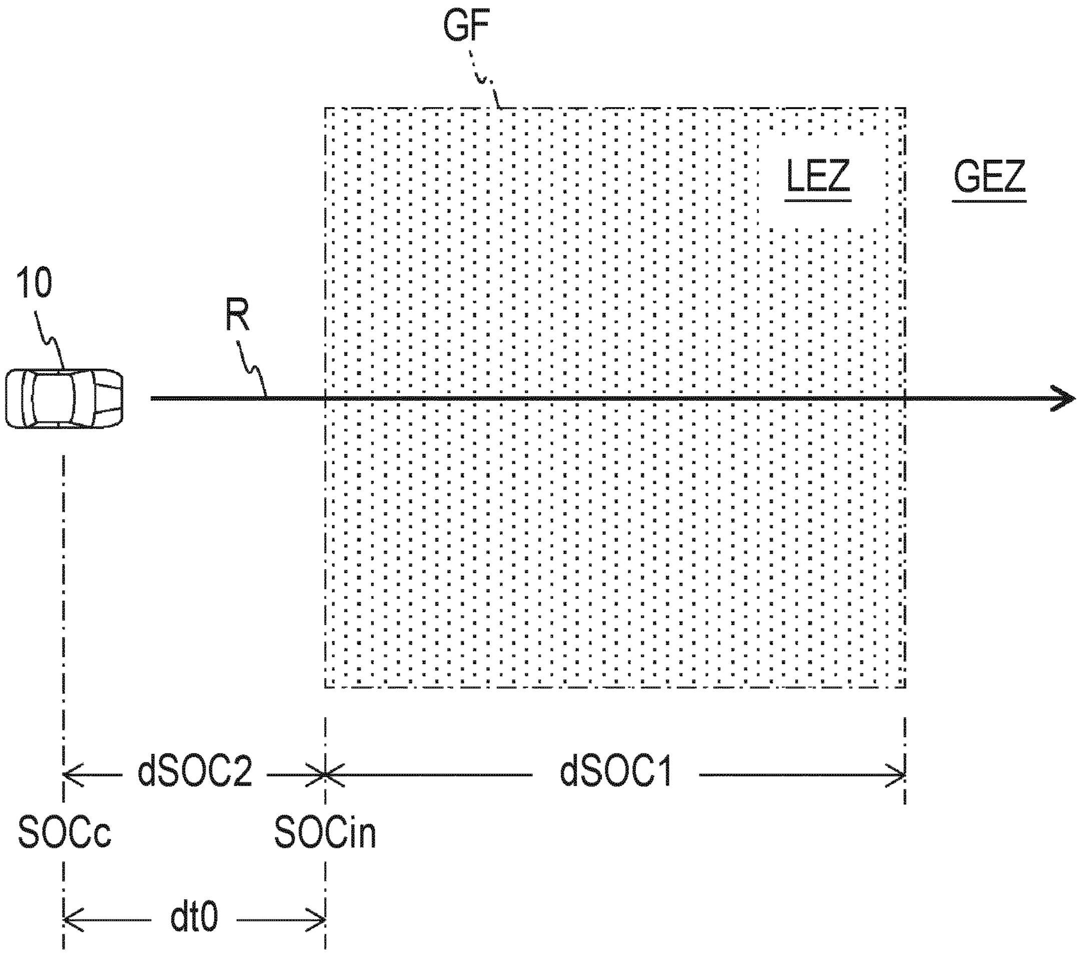

Europäisches Patentamt
European Patent Office
Office européen des brevets

# EUROPEAN SEARCH REPORT

Application Number
EP 21 17 7632

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/290149 A1 (KRISTINSSON JOHANNES GEIR [US] ET AL) 15 November 2012 (2012-11-15) * abstract; claims 1-20; figures 1-6 * * paragraph [0037] - paragraph [0041] * * paragraph [0044] - paragraph [0046] * * paragraph [0051] - paragraph [0052] * ----- | 1-6 | INV. B60W10/06 B60W10/08 B60W10/26 B60W50/14 B60W50/16 B60W20/12 B60W50/00 |
| X | EP 2 689 982 A1 (FUJITSU LTD [JP]) 29 January 2014 (2014-01-29) * abstract; claims 1-16; figures 1-4 * ----- | 1-6 | |
| X | US 2019/390970 A1 (CHA JUNG MIN [KR] ET AL) 26 December 2019 (2019-12-26) * abstract; claims 1-19; figures 1-10 * ----- | 1-6 | |
| X | US 5 815 824 A (SAGA KENICHI [JP] ET AL) 29 September 1998 (1998-09-29) * abstract; claims 1-23; figures 1-15 * ----- | 1-6 | |
| | | | TECHNICAL FIELDS SEARCHED (IPC) |
| | | | B60W |

The present search report has been drawn up for all claims

1

| Place of search | Date of completion of the search | Examiner |
|---|---|---|
| Munich | 11 November 2021 | Moroncini, Alessio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 21 17 7632

This annex lists the patent family members relating to the patent documents cited in the above-mentioned European search report. The members are as contained in the European Patent Office EDP file on The European Patent Office is in no way liable for these particulars which are merely given for the purpose of information.

11-11-2021

| Patent document cited in search report | Publication date | Patent family member(s) | Publication date |
|---|---|---|---|
| US 2012290149 A1 | 15-11-2012 | NONE | |
| EP 2689982 A1 | 29-01-2014 | EP 2689982 A1 | 29-01-2014 |
| | | WO 2014016327 A1 | 30-01-2014 |
| US 2019390970 A1 | 26-12-2019 | CN 110641448 A | 03-01-2020 |
| | | DE 102018221031 A1 | 02-01-2020 |
| | | KR 20200000608 A | 03-01-2020 |
| | | US 2019390970 A1 | 26-12-2019 |
| US 5815824 A | 29-09-1998 | JP 3264123 B2 | 11-03-2002 |
| | | JP H08240435 A | 17-09-1996 |
| | | US 5815824 A | 29-09-1998 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3075210 A